# EUROPEAN PATENT APPLICATION

(11) **EP 4 810 261 A1**
(43) Date of publication of application: **23.09.2026**
(21) Application number: 26163290.5
(22) Date of filing: 09.03.2026
(51) Int. Cl.: B41J 25/316, B05B 13/04, B25J 9/16, B41J 2/175, B41J 11/00, B41J 25/00, B41J 25/304

(54) **LIQUID EJECTION APPARATUS AND LIQUID EJECTION METHOD**

(30) Priority: 21.03.2025 JP 2025047181; 21.03.2025 JP 2025047190
(71) Applicant: Ricoh Company, Ltd., Tokyo 143-8555 (JP); Institute of Science Tokyo, Tokyo 152-8550 (JP); RWTH Aachen University, 52062 Aachen (DE)
(72) Inventor: MIURA, Shogo, Ohta-ku, 143-8555 (JP); TANAKA, Tomoya, Ohta-ku, 143-8555 (JP); HAYASHI, Natsumi, Ohta-ku, 143-8555 (JP); CORVES, Burkhard, 52062 Aachen (DE); HUESING, Mathias, 52062 Aachen (DE); MIRZ, Christian, 52062 Aachen (DE); BRUECKMANN, Nils, 52062 Aachen (DE); KNOBLOCH, Thomas, 52062 Aachen (DE); KRINITZ, Rickmer, 52062 Aachen (DE); BETTANIN, Gabriel Nalin, 52062 Aachen (DE); TAKEDA, Yukio, Meguro-ku, 152-8550 (JP); SUGAHARA, Yusuke, Meguro-ku, 152-8550 (JP); JIANG, Ming, Meguro-ku, 152-8550 (JP); KATO, Koichi, Meguro-ku, 152-8550 (JP)
(74) Representative: J A Kemp LLP

(57) **Abstract**

A liquid ejection apparatus includes a liquid ejection head, a shape tracking apparatus, a measurement apparatus, and a correction apparatus. The liquid ejection head is configured to eject liquid to a target object. The shape tracking apparatus is configured to control a position and an angle of the liquid ejection head relative to a surface of the target object, and move the liquid ejection head relative to the surface of the target object. The measurement apparatus is configured to measure a movement state of the liquid ejection head by the shape tracking apparatus. The correction apparatus holds the liquid ejection head, and is configured to prevent oscillation of the liquid ejection head based on a measurement result by the measurement apparatus, the oscillation occurring when the shape tracking apparatus moves the liquid ejection head.

## Description

### BACKGROUND OF THE INVENTION

### 1. Field of the Invention

The present invention is related to a liquid ejection apparatus and a liquid ejection method.

### 2. Description of the Related Art

When painting is to be performed on a non-planar surface of such as a vehicle body, using a sprayer, such as a spray gun, that sprays ink, a painting material is sprayed in a mist, and therefore, a masking process is performed on the vehicle body and thereafter painting is performed by a spray gun to draw a line. However, operation of removing masking after the masking process and completion of the painting is cumbersome and operation efficiency is reduced, which is a problem. To cope with the problem as described above, a technology for performing printing in a non-planar region using a mechanism, such as an articulated robot, that is able to freely operate in a three-dimensional space, and that is provided with an inkjet head, to draw a line without performing a masking process and form an arbitrary image on a painting surface is known.

As a painting system using a robot as described above, a technology is disclosed in which, to adjust an interval between printing dots that are located at edges of each of printing trajectories such that two printing trajectories formed by primary motion are located laterally adjacent to each other, second motion that is approximately perpendicular to the primary motion is formed to improve quality between line breaks is disclosed (for example, Japanese Unexamined Patent Application Publication No. 2013-202781).

However, in the technology described in Japanese Unexamined Patent Application Publication No. 2013-202781, although landing positions between line breaks are adjusted, reduction of landing accuracy in a path due to oscillation of a printing head is not improved, which is a problem.

The present invention has been conceived in view of the foregoing situations, and an object of the present invention is to provide a liquid ejection apparatus and a liquid ejection method that are able to prevent oscillation of a liquid ejection head that occurs when the liquid ejection head moves, and improve painting accuracy.

### SUMMARY OF THE INVENTION

According to an aspect of the present invention, a liquid ejection apparatus includes a liquid ejection head, a shape tracking apparatus, a measurement apparatus, and a correction apparatus. The liquid ejection head is configured to eject liquid to a target object. The shape tracking apparatus is configured to control a position and an angle of the liquid ejection head relative to a surface of the target object, and move the liquid ejection head relative to the surface of the target object. The measurement apparatus is configured to measure a movement state of the liquid ejection head by the shape tracking apparatus. The correction apparatus holds the liquid ejection head, and is configured to prevent oscillation of the liquid ejection head based on a measurement result by the measurement apparatus, the oscillation occurring when the shape tracking apparatus moves the liquid ejection head.

According to an aspect of the present invention, it is possible to prevent oscillation of a liquid ejection head that occurs when the liquid ejection head moves, and improve painting accuracy.

### BRIEF DESCRIPTION OF THE DRAWINGS

FIG. 1 is a diagram illustrating an example of an overall configuration of a liquid ejection apparatus according to a first embodiment;
FIG. 2 is a diagram illustrating an example of a configuration of a painting robot unit according to the first embodiment;
FIG. 3 is a diagram for explaining an overview of overall operation of the liquid ejection apparatus according to the first embodiment;
FIG. 4 is a diagram for explaining an overview of operation of correcting oscillation of an inkjet head in the liquid ejection apparatus according to the first embodiment;
FIG. 5 is a diagram illustrating an example of a configuration of the inkjet head of the painting robot unit according to the first embodiment;
FIG. 6 is a cross-sectional view of the inkjet head of the painting robot unit according to the first embodiment;
FIG. 7 is a diagram illustrating an example of a configuration of a supply unit according to the first embodiment;
FIG. 8 is a diagram illustrating an example of an overall configuration of a correction apparatus of the painting robot unit according to the first embodiment;
FIG. 9 is a diagram illustrating an example of a detailed configuration of the correction apparatus of the painting robot unit according to the first embodiment;
FIG. 10 is a diagram for explaining operation of moving the inkjet head in an X direction in the correction apparatus of the painting robot unit according to the first embodiment;
FIG. 11 is a diagram for explaining operation of moving the inkjet head in a Y direction in the correction apparatus of the painting robot unit according to the first embodiment;
FIG. 12 is a diagram illustrating an example of scanning operation of the ink head of the liquid ejection apparatus according to the first embodiment;
FIG. 13 is a diagram illustrating an example of a hardware configuration of a painting system according to the first embodiment;
FIG. 14 is a diagram illustrating an example of a functional block configuration of a controller of a control unit of the liquid ejection apparatus according to the first embodiment;
FIG. 15 is a flowchart illustrating an example of the flow of correction data generation operation of the liquid ejection apparatus according to the first embodiment;
FIG. 16 is a diagram for explaining a speed change when the inkjet head is caused to perform scanning in a predetermined direction in the liquid ejection apparatus according to the first embodiment;
FIG. 17 is a graph illustrating an example of ideal operation and actual operation of the inkjet head in the liquid ejection apparatus according to the first embodiment;
FIG. 18 is a graph illustrating an example of correction data and a correction result generated by the liquid ejection apparatus according to the first embodiment;
FIG. 19 is a graph illustrating an example of oscillation of the inkjet head in a scanning direction in the liquid ejection apparatus according to the first embodiment;
FIG. 20 is a diagram illustrating an example of a configuration of a painting robot unit according to a first modification of the first embodiment;
FIG. 21 is a diagram illustrating an example of a configuration of a painting robot unit according to a second modification of the first embodiment;
FIG. 22 is a diagram illustrating an example of a configuration of a painting robot unit according to a second embodiment; and
FIG. 23 is a diagram illustrating an example of a configuration of a painting robot unit according to a third embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings.

Embodiments of a liquid ejection apparatus and a liquid ejection method according to the present invention will be described in detail below with reference to the drawings. The present invention is not limited by the embodiments below, and components in the embodiments below include one that can easily be thought of by a person skilled in the art, one that is practically identical, and one that is within an equivalent range. Furthermore, within the scope not departing from the gist of the embodiments described below, various omission, replacement, and modifications of the components may be made.

### First embodiment

### Overall configuration of liquid ejection apparatus

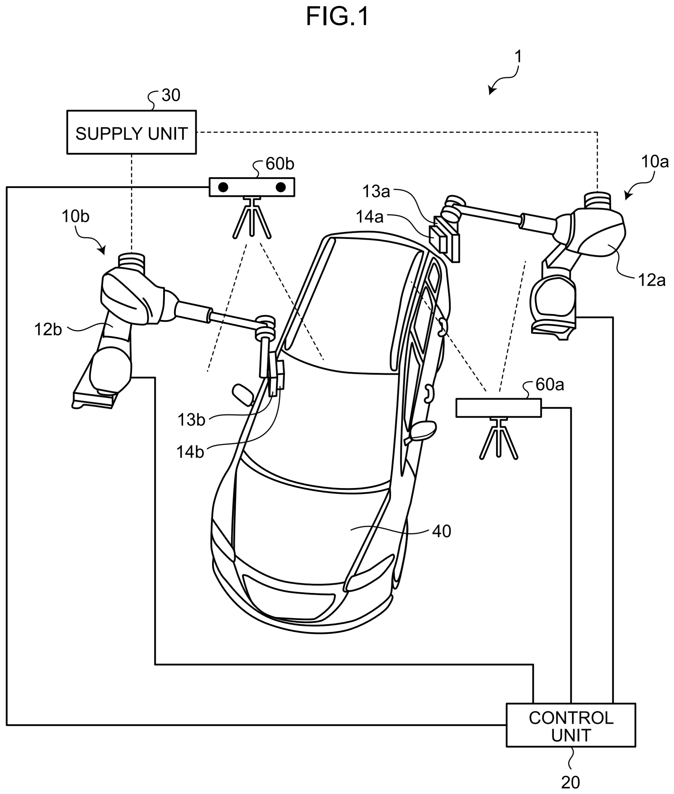

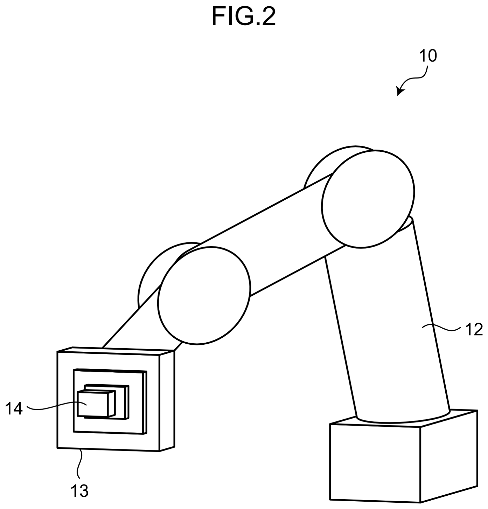

FIG. 1 is a diagram illustrating an example of an overall configuration of a liquid ejection apparatus according to a first embodiment. FIG. 2 is a diagram illustrating an example of a configuration of a painting robot unit according to the first embodiment. With reference to FIG. 1 and FIG. 2, an overall configuration of a liquid ejection apparatus 1 according to the first embodiment will be described below.

The liquid ejection apparatus 1 illustrated in FIG. 1 is an apparatus that ejects liquid, such as ink, onto a target object 40 that is a painting target and performs painting to form an image. The liquid ejection apparatus 1 includes, as illustrated in FIG. 1, painting robot units 10a and 10b, a control unit 20, a supply unit 30, and measurement apparatuses 60a and 60b.

The painting robot units 10a and 10b are robot apparatuses that are arranged around the target object 40, cause inkjet heads 14a and 14b (to be described later) to perform scanning and eject liquid, and performs painting on a surface of the target object 40. The painting robot unit 10a includes a shape tracking apparatus 12a, a correction apparatus 13a, and the inkjet head 14a. The painting robot unit 10b includes a shape tracking apparatus 12b, a correction apparatus 13b, and the inkjet head 14b.

Meanwhile, the painting robot units 10a and 10b may be simply referred to as a "painting robot unit 10" when an arbitrary painting robot unit is indicated or when they are collectively referred to. Further, the shape tracking apparatuses 12a and 12b may be simply referred to as a "shape tracking apparatus 12" when an arbitrary shape tracking apparatus is indicated or when they are collectively referred to. Furthermore, the correction apparatuses 13a and 13b may be simply referred to as a "correction apparatus 13" when an arbitrary correction apparatus is indicated or when they are collectively referred to. Moreover, the inkjet heads 14a and 14b may be simply referred to as an "inkjet head 14" when an arbitrary inkjet head is indicated or when they are collectively referred to. In other words, the painting robot unit 10 includes, as illustrated in FIG. 2, the shape tracking apparatus 12, the correction apparatus 13, and an inkjet head 14. Furthermore, the measurement apparatuses 60a and 60b may be simply referred to as a "measurement apparatus 60" when an arbitrary measurement apparatus is indicated or when they are collectively referred to. Moreover, in the example illustrated in FIG. 1, the two painting robot units 10 are illustrated, but embodiments are not limited to this example, and the liquid ejection apparatus 1 may include the single painting robot unit 10 or the three or more painting robot units 10. In addition, the liquid ejection apparatus 1 may include the single measurement apparatus 60 or the three or more measurement apparatuses 60. Furthermore, the measurement apparatus 60 is provided for each of the painting robot units 10, but embodiments are not limited to this example, and the single measurement apparatus 60 may be provided for the plurality of painting robot units 10.

The target object 40 is a body of, for example, a vehicle, an airplane, a ship, or the like. The vehicle includes an automobile, a track, a train, and the like. In the example illustrated in FIG. 1, the target object 40 is a vehicle. Further, in the example illustrated in FIG. 1, the target object 40 extends in a predetermined direction (longitudinal direction). The direction in which the target object 40 extends may be referred to as an extending direction, an elongated direction, or the longitudinal direction.

The shape tracking apparatus 12 is an apparatus, such as an articulated robot, that determines a distance and an angle of the inkjet head relative to a surface of the target object 40 and supports the correction apparatus 13 holding the inkjet head 14 movably back and forth (perform scanning) in a predetermined direction. Meanwhile, "shape tracking", or simply, "tracking", in the present invention means control of the position and the angle of the inkjet head relative to a surface of a target object to maintain a predetermined distance and a predetermined angle of the inkjet head relative to the surface of the target object. The shape tracking apparatus 12 includes a link and a joint. Further, the shape tracking apparatus 12 changes relative positions and relative inclination between the inkjet head 14 and the target object 40 by rotating or displacing the link and the joint, so that it is possible to change a liquid ejection direction of the inkjet head 14 and cause a nozzle surface of the inkjet head 14 to face the target object 40. In other words, the shape tracking apparatus 12 has a function to cause the inkjet head 14 to track the surface of the target object 40, and is one example of a "tracking unit" according to the present invention. Furthermore, as illustrated in FIG. 2, the shape tracking apparatus 12 holds the correction apparatus 13 in which the inkjet head 14 is mounted at a side of a leading end of an arm structure. In other words, the shape tracking apparatus 12 causes the inkjet head 14 to perform scanning (movement) in a predetermined direction while maintaining a predetermined distance and a predetermined angle of the inkjet head 14 relative to the surface of the target object 40, that is, while causing the inkjet head 14 to track the surface of the target object 40. That is, the shape tracking apparatus 12 has a function to move the inkjet head 14 relative to the target object 40 (in the present embodiment, a function to cause the inkjet head 14 to perform scanning (movement) with respect to the target object 40). Meanwhile, scanning of the inkjet head 14 by the shape tracking apparatus 12 is one example of operation of moving the inkjet head 14 relative to the target object 40.

Meanwhile, in the example illustrated in FIG. 2, an articulated robot is illustrated as the shape tracking apparatus 12, but this is one example. The shape tracking apparatus 12 is not limited to this example, and may be an apparatus other than the articulated robot. Examples of the apparatus other than articulated robot include a Cartesian robot, a parallel link robot, 3-PPR (Prismatic joints, Prismatic joints, Revolute joint), 2-RRS (Revolute joint, Revolute joint, Spherical joint), RRRU (Revolute joint, Revolute joint, Revolute joint, Universal joint), 2-RPS (Revolute joint, Prismatic joints, Spherical joint), RPRU (Revolute joint, Prismatic joints, Revolute joint, Universal joint), and 3-RR (Revolute joint, Revolute joint).

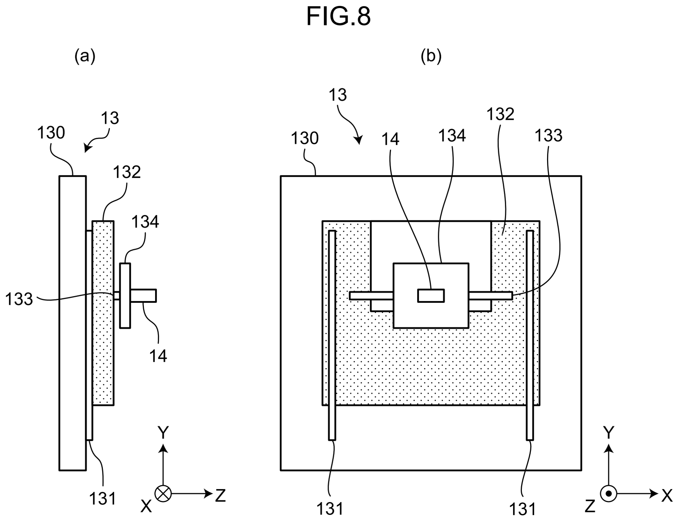

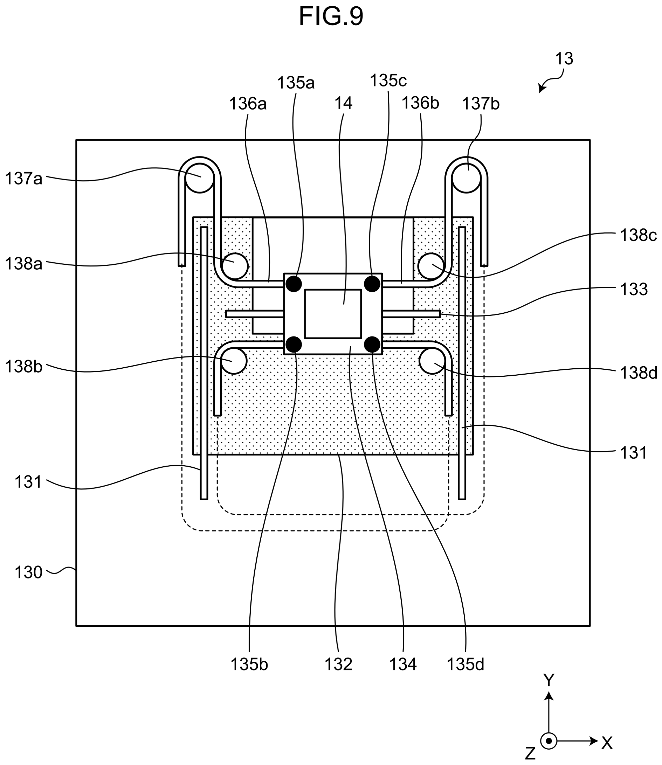

The correction apparatus 13 is, as illustrated in FIG. 2, an apparatus that is mounted at the side of the leading end of the arm structure of the shape tracking apparatus 12, holds the inkjet head 14, and controls (corrects) the position and the posture of the inkjet head 14 so as to cancel out oscillation of the inkjet head 14. Specifically, the correction apparatus 13 corrects the position and the posture of the inkjet head 14 so as to cancel out oscillation of the inkjet head 14 that may occur when the shape tracking apparatus 12 causes the inkjet head 14 to perform scanning. In other words, the correction apparatus 13 prevents oscillation of the inkjet head 14 that occurs when the shape tracking apparatus 12 moves the inkjet head 14. Meanwhile, a detailed configuration of the correction apparatus 13 will be described later with reference to FIG. 8 and FIG. 9.

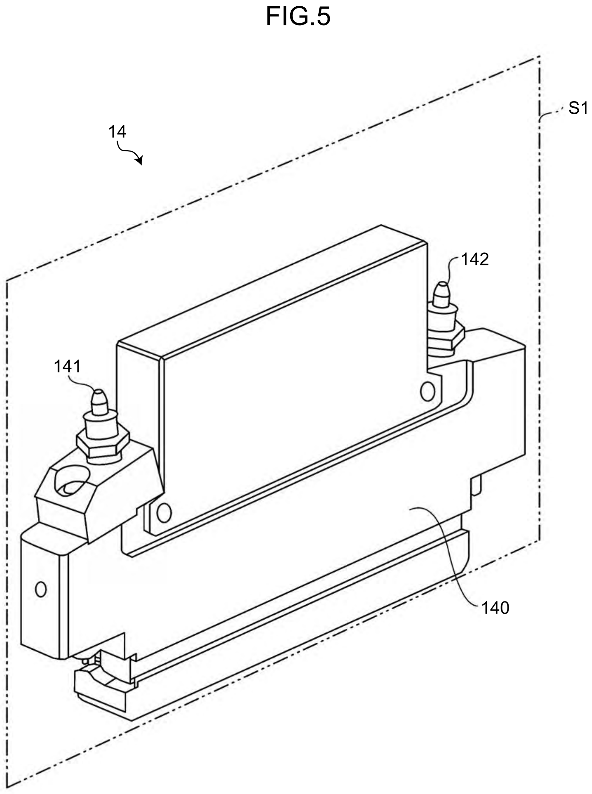

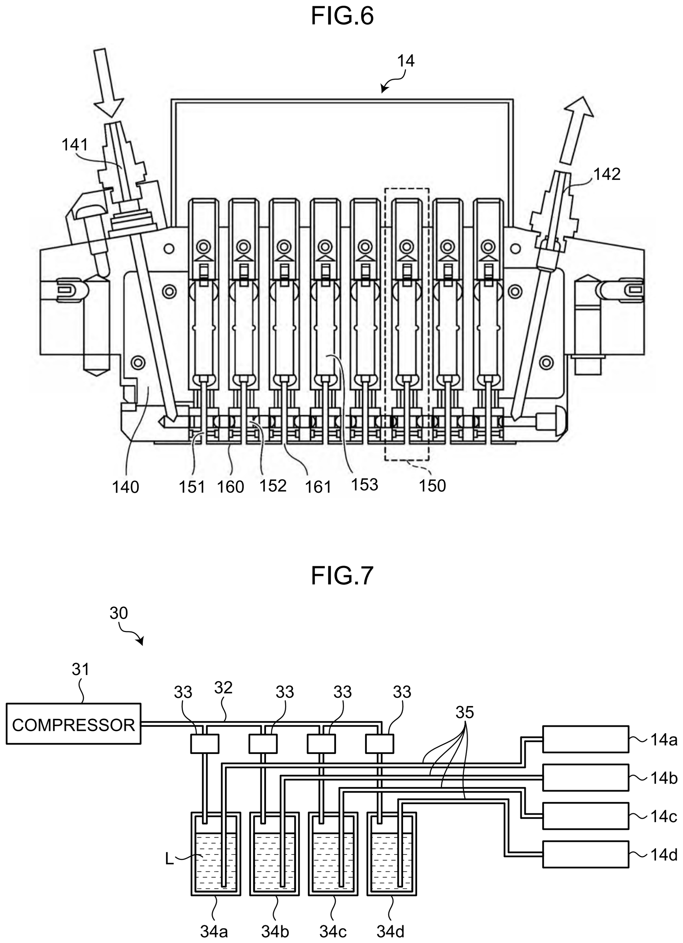

The inkjet head 14 is a liquid ejection head that includes a nozzle surface on which a plurality of nozzles for ejecting liquid, such as ink, are formed, and that is held by the correction apparatus 13 at the side of the leading end of the arm structure of the shape tracking apparatus 12 as illustrated in FIG. 2. The inkjet head 14 that is held by the correction apparatus 13 is caused to perform scanning by the shape tracking apparatus 12 and is able to perform painting on the target object 40 by ejecting liquid from the nozzles. Meanwhile, a detailed configuration of the inkjet head 14 will be described later with reference to FIG. 5 and FIG. 6.

Meanwhile, the painting robot unit 10 may include, in addition to the components illustrated in FIG. 1 and FIG. 2, a detection apparatus that measures a position and inclination of the inkjet head 14 in an XY direction, detects a painting start position on the target object 40, and detects a painting target object size. In this case, the detection apparatus is an apparatus that outputs feature point information on three-dimensional positions on three or more feature points, and may be, for example, a three-dimensional (3D) camera, such as a stereo camera, a 3D sensor, a laser displacement meter, or the like other than the stereo camera. When the detection apparatus is a stereo camera, it is possible to obtain a distance image of the target object 40 by a triangulation method based on disparity between captured images that are captured by a plurality of cameras, and output, as the feature point information, the distance image to the control unit 20. Further, when the detection apparatus is a laser displacement meter, it is possible to perform measurement in a Z direction (liquid ejection direction), and detect a height of a roof of the target object 40, a curvature of the target object 40, and the like.

The measurement apparatus 60 is, as illustrated in FIG. 1, an apparatus that measures a movement state of the inkjet head 14 that is caused to perform scanning by the shape tracking apparatus 12. The measurement apparatus 60 is configured with, for example, a stereo camera, a motion capture, a laser tracker, or the like. The measurement apparatus 60 acquires measurement data including three-dimensional information that indicates displacement of the inkjet head 14 in the X direction, the Y direction, and the Z direction. In other words, the measurement data is data that indicates a measurement result obtained by the measurement apparatus 60. The measurement apparatus 60 outputs the acquired measurement data to the control unit 20. Meanwhile, the measurement apparatus 60 may acquire measurement data that indicates displacement in only a direction (for example, the X direction or the Y direction) that is to be corrected by the correction apparatus 13, instead of the measurement data that indicates displacement in all of the X direction, the Y direction, and the Z direction. Further, the measurement apparatus 60 may be a gyro sensor or the like that is arranged on a leading end of the shape tracking apparatus 12.

The control unit 20 is an apparatus or a system that controls overall operation of the painting robot unit 10. Specifically, based on shape data of the target object 40 that is determined in advance, the control unit 20 causes the shape tracking apparatus 12 to maintain a predetermined distance and a predetermined angle of the inkjet head 14 relative to the surface of the target object 40 to track the surface of the target object 40, causes the inkjet head 14 to perform scanning (movement) in the extending direction, and causes the inkjet head 14 to eject liquid. With this configuration, it is possible to perform painting on the surface of the target object 40.

Furthermore, the control unit 20 generates correction data for causing the correction apparatus 13 to perform correction operation so as to cancel out oscillation of the inkjet head 14, based on the measurement data on the inkjet head 14 that is measured by the measurement apparatus 60.

The supply unit 30 is an apparatus or a system for supplying, to the inkjet head 14, liquid that is to be ejected from the inkjet head 14 to the target object 40. Meanwhile, a detailed configuration of the supply unit 30 will be described later with reference to FIG. 7.

Meanwhile, the liquid ejection apparatus 1 may include, for example, a maintenance unit that removes thickening liquid or a foreign object that adheres to the nozzle surface of the inkjet head 14 or removes thickening liquid or a foreign object that is present in the inkjet head 14, in addition to the components as illustrated in FIG. 1. With the maintenance unit as described above, it is possible to reduce ejection fault, such as non-ejection, misdirection, or variation in ejection speed, in the inkjet head 14, and maintain an ejection state of the inkjet head 14 as a normal state.

In the liquid ejection apparatus 1 as illustrated in FIG. 1 and FIG. 2 as described above, the target object 40 is conveyed by an object conveying apparatus (not illustrated) to a painting position. With respect to the stopped target object 40, the shape tracking apparatus 12 maintains the predetermined distance and the predetermined angle of the inkjet head 14 relative to the surface of the target object 40 to track the surface, causes the inkjet head 14 to perform scanning, and causes the inkjet head 14 to eject liquid to perform painting. Further, the target object 40 on which the painting is completed is conveyed to the outside of the painting position by the object conveying apparatus (not illustrated), and the next target object 40 is conveyed to the painting position.

### Overview of overall operation of liquid ejection apparatus

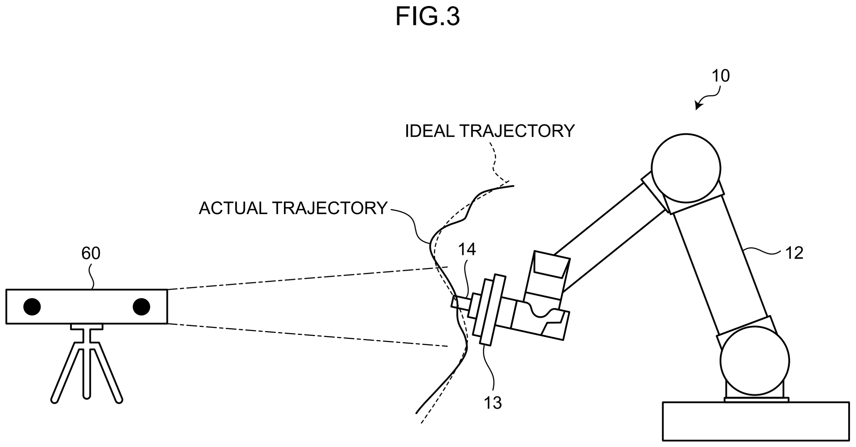

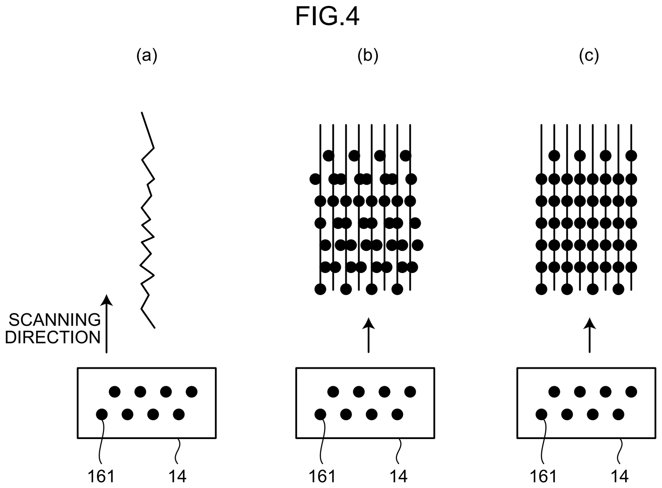

FIG. 3 is a diagram for explaining an overview of overall operation of the liquid ejection apparatus according to the first embodiment. FIG. 4 is a diagram for explaining an overview of operation of correcting oscillation of the inkjet head in the liquid ejection apparatus according to the first embodiment. With reference to FIG. 3 and FIG. 4, the overview of the overall operation of the liquid ejection apparatus 1 according to the present embodiment will be described.

When the shape tracking apparatus 12 actually moves the inkjet head 14 (causes the inkjet head 14 to perform actual operation) in accordance with an ideal trajectory (a path that is determined in advance) of the inkjet head 14 that is needed to perform painting on the target object 40, the inkjet head 14 deviates from the ideal trajectory depending on movement accuracy of the shape tracking apparatus 12 and due to oscillation that occurs at the time of movement as illustrated in FIG. 3 and FIG. 4(a). When the inkjet head 14 moves while deviating from the ideal trajectory due to the oscillation of the inkjet head 14, as illustrated in FIG. 4(b), ink landing positions ejected from nozzles 161 are deviated from predetermined positions and dots are formed at deviated positions, so that adjacent dots are deviated from expected positions, which leads to occurrence of a defect, such as an unwanted line or unevenness, and quality of an image painted on the target object 40 is reduced.

To cope with this, in the liquid ejection apparatus 1 according to the present embodiment, deviation from the ideal trajectory due to oscillation of the inkjet head 14 is corrected such that an actual trajectory of the inkjet head 14 (a path of the inkjet head 14 measured by the measurement apparatus 60) approaches the ideal trajectory and improve accuracy of a landing position of liquid that is ejected from the inkjet head 14 on the target object 40. As illustrated in FIG. 3, in the painting robot unit 10 of the liquid ejection apparatus 1, as for the inkjet head 14, the correction apparatus 13 is installed at the side of the leading end of the arm structure of the shape tracking apparatus 12. Further, when the inkjet head 14 is caused to move (perform scanning) by the shape tracking apparatus 12 relative to the target object 40, the shape tracking apparatus 12 is caused to generate, in advance, operation data for causing the inkjet head 14 to move along the ideal trajectory. Here, when the shape tracking apparatus 12 is caused to perform actual operation, as described above, deviation from the ideal trajectory occurs depending on the moving accuracy of the shape tracking apparatus 12 and due to oscillation that occurs at the time of movement. To cope with this, as illustrated in FIG. 3, the measurement apparatus 60 of the liquid ejection apparatus 1 measures, in advance, an actual trajectory of the inkjet head 14 that is operated by the shape tracking apparatus 12 based on the operation data as described above. Further, the control unit 20 of the liquid ejection apparatus 1 calculates, based on the measurement data on measurement of the inkjet head 14 measured by the measurement apparatus 60, an amount of deviation of the inkjet head 14 from the ideal trajectory (an amount of a difference between a path that is determined in advance and the path of the inkjet head 14 measured by the measurement apparatus 60), and generates correction data for operating the correction apparatus 13 in an opposite phase with respect to the amount of deviation. Furthermore, the control unit 20 operates the correction apparatus 13 based on the correction data when the shape tracking apparatus 12 causes the inkjet head 14 to move (perform scanning). With this configuration, the above-described amount of deviation from the ideal trajectory with respect to movement of the inkjet head 14 is corrected. With the correction operation performed by the correction apparatus 13, dots are aligned as illustrated in FIG. 4(c). In other words, it is possible to improve the movement accuracy of the inkjet head 14 and improve accuracy of landing positions.

### Configuration of inkjet head

FIG. 5 is a diagram illustrating an example of a configuration of the inkjet head of the painting robot unit according to the first embodiment. FIG. 6 is a cross-sectional view of the inkjet head of the painting robot unit according to the first embodiment. With reference to FIG. 5 and FIG. 6, a configuration of the inkjet head 14 of the painting robot unit 10 according to the present embodiment will be described.

As illustrated in FIG. 5 and FIG. 6, the inkjet head 14 includes a housing 140, a supply port 141, and a collection port 142.

The housing 140 is a main body part of the inkjet head 14. The housing 140 includes, inside thereof, a plurality of ejection modules 150 that are arranged regularly as illustrated in FIG. 6. Further, as illustrated in FIG. 6, a nozzle plate 160 on which the plurality of nozzles 161 for ejecting liquid to outside is bonded at an ejection side of the housing 140.

The supply port 141 is a port for supplying liquid that is externally pressurized to the ejection modules 150.

The collection port 142 is a port for discharging non-ejected liquid to the outside when valves of the nozzles 161 are opened.

The ejection modules 150 are modules for ejecting, from the nozzles 161, liquid that is supplied from the supply port 141. Each of the ejection modules 150 includes, as illustrated in FIG. 6, a valve 151, a flow path 152, and a piezoelectric element 153.

The valve 151 is one example of a needle-shaped valve body. The valve 151 is driven by the piezoelectric element 153, and performs reciprocating motion in a liquid ejection direction in the housing 140 to open and close the nozzle 161.

The flow path 152 is a common flow path for sending the liquid supplied from the supply port 141 to the plurality of ejection modules 150 (eight in the example illustrated in FIG. 6) that are arranged in the housing 140.

The piezoelectric element 153 is an element that is deformed by being applied with voltage, and causes the liquid supplied from the supply port 141 to be ejected from the nozzles 161.

In the inkjet head 14 as described above, the pressurized liquid is supplied from the supply port 141 through the flow path 152 while valves of the supply port 141 and the collection port 142 are closed. When the valves 151 are present at positions at which the nozzles 161 are closed, liquid is not ejected from the nozzles 161. In contrast, when the valves 151 are lifted by driving the piezoelectric elements 153, the valves of the nozzles 161 are opened and liquid is ejected from the nozzles 161.

### Configuration of supply unit

FIG. 7 is a diagram illustrating an example of a configuration of the supply unit according to the first embodiment. A configuration of the supply unit 30 of the liquid ejection apparatus 1 according to the present embodiment will be described below with reference to FIG. 7.

As illustrated in FIG. 7, the supply unit 30 includes a compressor 31, a pipe 32, air regulators 33, liquid tanks 34a to 34d, and tubes 35. Meanwhile, FIG. 7 illustrates an example of a configuration in which the liquid ejection apparatus 1 includes the four painting robot units 10, and the painting robot units 10 include the inkjet heads 14a to 14d, respectively.

The compressor 31 is a compression apparatus that pressurizes (compresses) air and sends the pressurized air to the liquid tanks 34a to 34d.

The pipe 32 is a pipe that connects the compressor 31 and the air regulators 33, connects the air regulators 33 and the liquid tanks 34a to 34d, and sends the pressurized air supplied from the compressor 31 to the liquid tanks 34a to 34d.

The air regulators 33 are pressure adjustment valves for adjusting pressure of the pressurized air that is supplied from the compressor 31.

The liquid tanks 34a to 34d are airtight containers that store therein liquid L to be ejected to the inkjet heads 14a to 14d, respectively.

The tubes 35 are tubes for establishing connections such that the liquid stored in the liquid tanks 34a to 34d can be distributed to the inkjet heads 14a to 14d, respectively.

In the supply unit 30 as described above, the pressurized air that is compressed by the compressor 31 is first supplied to the liquid tanks 34a to 34d via the pipe 32. The liquid L that is pressurized by the pressurized air is supplied to inlets of the inkjet heads 14a to 14d, and the inkjet heads 14a to 14d ejects the liquid L from the nozzles 161.

Meanwhile, the liquid tanks 34a to 34d need not always be provided for the respective inkjet heads 14, but it may be possible to supply the liquid to all of the inkjet heads 14 from a single liquid tank.

### Configuration and operation of correction apparatus of painting robot unit

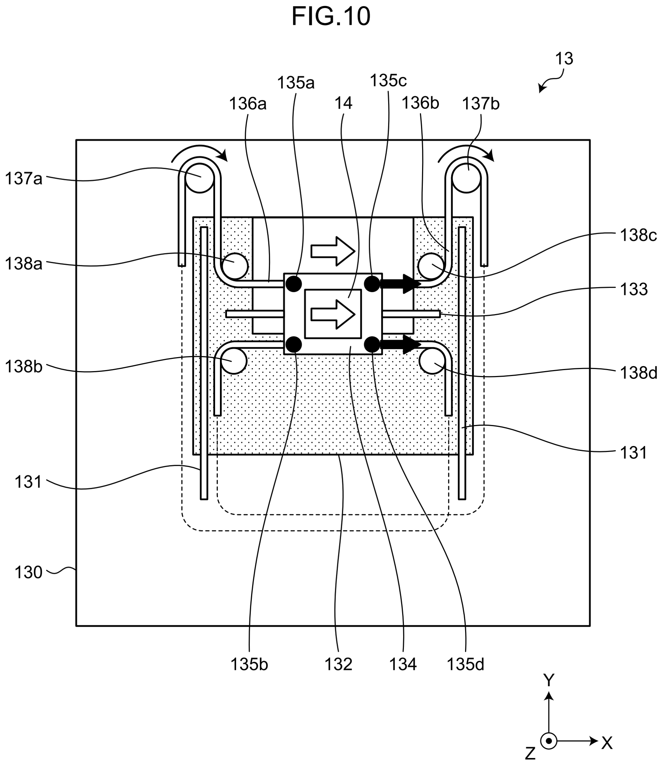

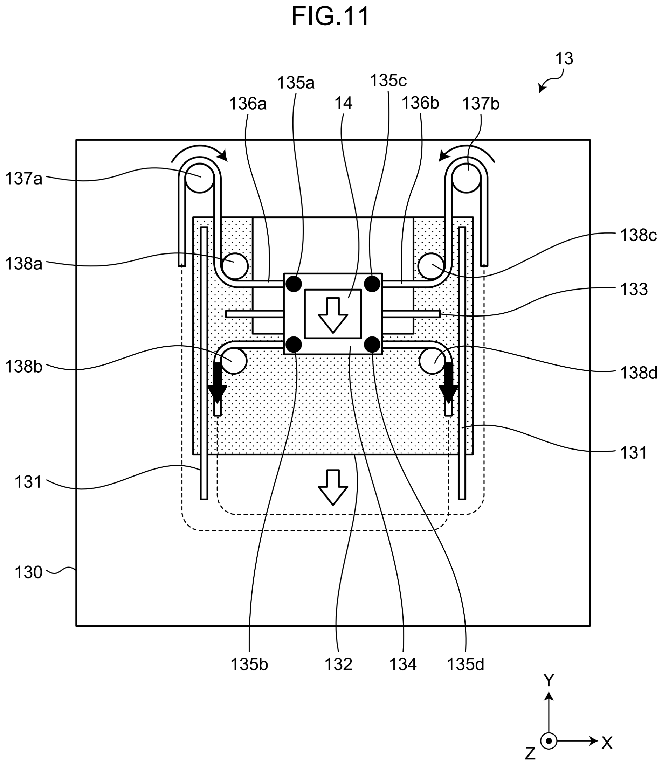

FIG. 8 is a diagram illustrating an example of an overall configuration of the correction apparatus of the painting robot unit according to the first embodiment. FIG. 9 is a diagram illustrating an example of a detailed configuration of the correction apparatus of the painting robot unit according to the first embodiment. FIG. 10 is a diagram for explaining operation of moving the inkjet head in the X direction in the correction apparatus of the painting robot unit according to the first embodiment. FIG. 11 is a diagram for explaining operation of moving the inkjet head in the Y direction in the correction apparatus of the painting robot unit according to the first embodiment. With reference to FIG. 8 to FIG. 11, the configuration and the operation of the correction apparatus 13 of the painting robot unit 10 according to the present embodiment will be described. FIG. 8(a) is a side view of the correction apparatus 13 (a diagram viewed in the X direction), and FIG. 8(b) is a front view of the correction apparatus 13 (a diagram viewed in the Z direction).

A schematic configuration of the correction apparatus 13 will be described below with reference to FIG. 8. As described above, the correction apparatus 13 is an apparatus that is mounted at the side of the leading end of the arm structure of the shape tracking apparatus 12, holds the inkjet head 14, and controls (corrects) the position and the posture of the inkjet head 14 so as to cancel out oscillation of the inkjet head 14. The correction apparatus 13 includes, as illustrated in FIG. 8, a base member 130 (first member), a Y-direction movement guide 131 (first guide member), an intermediate stage 132 (second member), an X-direction movement guide 133 (second guide member), and a head holding member 134 (second member). In this case, the inkjet head 14 ejects the liquid in the Z direction illustrated in FIG. 8.

The base member 130 is a member that is fixed to the leading end of the arm structure of the shape tracking apparatus 12.

The Y-direction movement guide 131 is a guide member that is fixed to the base member 130 and supports the intermediate stage 132 movably back and forth in a Y direction (one example of a first direction) illustrated in FIG. 8. Meanwhile, in the example illustrated in FIG. 8, the Y-direction movement guide 131 includes two guide members, but embodiments are not limited to this example, and the Y-direction movement guide 131 may include a single guide member or three or more guide members. Further, the Y-direction movement guide 131 need not always be fixed to the base member 130, but may be fixed to the intermediate stage 132 such that the intermediate stage 132 is movable back and forth in the Y direction.

The intermediate stage 132 is a stage member which is supported by the Y-direction movement guide 131 movably in the Y direction, and to which the X-direction movement guide 133 that supports the head holding member 134 movably in the X direction (one example of a second direction) is fixed.

The X-direction movement guide 133 is a guide member that is fixed to the intermediate stage 132 and supports the head holding member 134 holding the inkjet head 14 movably back and forth in the X direction illustrated in FIG. 8. Meanwhile, in the example illustrated in FIG. 8, the X-direction movement guide 133 is configured with a single guide member, but embodiments are not limited to this example, and may include two or more guide members. Further, the X-direction movement guide 133 need not always be fixed to the intermediate stage 132, but may be fixed to the head holding member 134 such that the head holding member 134 is movable back and forth in the X direction.

The head holding member 134 is a stage member that is supported by the X-direction movement guide 133 movably in the X direction and holds the inkjet head 14.

Meanwhile, it is assumed that the intermediate stage 132 moves in the Y direction and the head holding member 134 moves in the X direction, but embodiments are not limited to this example, and the intermediate stage 132 may move in the X direction and the head holding member 134 may move in the Y direction.

A detailed configuration of the correction apparatus 13 will be described below with reference to FIG. 9. The correction apparatus 13 further includes, as illustrated in FIG. 9, connection units 135a to 135d, a first movement belt 136a, a second movement belt 136b, a first driving motor 137a, a second driving motor 137b, a first driven pulley 138a, a second driven pulley 138b, a third driven pulley 138c, and a fourth driven pulley 138d.

The connection units 135a to 135d are members that are arranged at four corners of the head holding member 134 having a rectangular shape and between the head holding member 134 and the base member 130, and connect ends of the first movement belt 136a and ends the second movement belt 136b. Specifically, in FIG. 9, the connecting unit 135a is arranged at a top left corner of the head holding member 134, a connecting unit 135b is arranged at a bottom left corner of the head holding member 134, the connecting unit 135c is arranged at a top right corner of the head holding member 134, and the connecting unit 135d is arranged at a bottom left corner of the head holding member 134. Among the connecting units, the connecting unit 135a is connected to one end of the first movement belt 136a, and the connecting unit 135d is connected to the other end of the first movement belt 136a. Further, the connecting unit 135c is connected to one end of the second movement belt 136b, and the connecting unit 135b is connected to the other end of the second movement belt 136b.

The first movement belt 136a is a belt member that causes the intermediate stage 132 to move in the Y direction and causes the head holding member 134 to move in the X direction by drive of the first driving motor 137a. The first movement belt 136a runs around the first driven pulley 138a, the first driving motor 137a, the fourth driven pulley 138d in this order from the one end connected to the connecting unit 135a in a state of tension, and the other end is connected to the connecting unit 135d. Specifically, as illustrated in FIG. 9, the first movement belt 136a extends leftward (in a left orientation) in the X direction from the one end connected to the connecting unit 135a toward the first driven pulley 138a, runs around the first driven pulley 138a, and extends upward (in an upward orientation) in the Y direction from the first driven pulley 138a toward the first driving motor 137a. Further, as illustrated in FIG. 9, the first movement belt 136a runs around a rotary shaft of the first driving motor 137a, extends downward (in a downward orientation) in the Y direction, runs around a plurality of driven pulleys (not illustrated) that are fixed to the base member 130, and extends upward (in an upward orientation) in the Y direction toward the fourth driven pulley 138d. Furthermore, as illustrated in FIG. 9, the first movement belt 136a runs around the fourth driven pulley 138d and extends leftward (in a left orientation) in the X direction, and the other end is connected to the connecting unit 135d. Specifically, the first movement belt 136a forms a closed system and extends in opposite orientations in the X direction from the one end and the other end. In other words, the first movement belt 136a runs so as to extend in the X direction and the Y direction as described above.

More specifically, the one end of the first movement belt 136a is connected to the head holding member 134 in one orientation (rightward when focusing on the connecting unit 135a) in the X direction, and the other end is connected to the head holding member 134 in the other orientation (leftward when focusing on the connecting unit 135d) in the X direction. Furthermore, a part extending from the one end of the first movement belt 136a further extends in the X direction, reaches the first driven pulley 138a, runs around the first driven pulley 138a, extends in one orientation (upward in FIG. 9) in the Y direction, and, a part extending from the other end extends in the X direction, reaches the fourth driven pulley 138d, runs around the fourth driven pulley 138d, and extends in the other orientation (downward in FIG. 9) in the Y direction.

Here, the direction is a concept of a linear state, and the orientation indicates a way in one direction from a certain start point.

The second movement belt 136b is a belt member that causes the intermediate stage 132 to move in the Y direction and causes the head holding member 134 in the X direction by drive of the second driving motor 137b. The second movement belt 136b runs around the third driven pulley 138c, the second driving motor 137b, the second driven pulley 138b in this order from the one end connected to the connecting unit 135c in a state of tension, and the other end is connected to the connecting unit 135b. Specifically, as illustrated in FIG. 9, the second movement belt 136b extends rightward (in a right orientation) in the X direction from the one end connected to the connecting unit 135c toward the third driven pulley 138c, runs around the third driven pulley 138c, and extends upward (in an upward orientation) in the Y direction from the third driven pulley 138c toward the second driving motor 137b. Further, as illustrated in FIG. 9, the second movement belt 136b runs around a rotary shaft of the second driving motor 137b, extends downward (in a downward orientation) in the Y direction, runs around a plurality of driven pulleys (not illustrated) that are fixed to the base member 130, and extends upward (in an upward orientation) in the Y direction toward the second driven pulley 138b. Furthermore, as illustrated in FIG. 9, the second movement belt 136b runs around the second driven pulley 138b and extends rightward (in a right orientation) in the X direction, and the other end is connected to the connecting unit 135b. Specifically, the second movement belt 136b forms a closed system and extends in opposite orientations in the X direction from the one end and the other end. In other words, the second movement belt 136b runs so as to extend in the X direction and the Y direction as described above.

More specifically, the one end of the second movement belt 136b is connected to the head holding member 134 in the other orientation (leftward when focusing on the connecting unit 135c) in the X direction as described above, and the other end is connected to the head holding member 134 in the one orientation (rightward when focusing on the connecting unit 135b) in the X direction as described above. Furthermore, a part extending from the one end of the second movement belt 136b further extends in the X direction, reaches the third driven pulley 138c, runs around the third driven pulley 138c, extends in one orientation (upward in FIG. 9) in the Y direction, and, a part extending from the other end extends in the X direction, reaches the second driven pulley 138b, runs around the second driven pulley 138b, and extends in the other orientation (downward in FIG. 9) in the Y direction.

The first driving motor 137a is a motor that is fixed to the base member 130, has the rotary shaft around which the first movement belt 136a runs as described above, and conveys the first movement belt 136a by rotation operation. Drive of the first driving motor 137a is controlled by a correction control apparatus 24 (to be described later). The first driving motor 137a is able to convey the first movement belt 136a in a forward direction or in a backward direction by forward rotation or backward rotation. With this configuration, it is possible to move the intermediate stage 132 in the Y direction and move the head holding member 134 in the X direction.

The second driving motor 137b is a motor that is fixed to the base member 130, has the rotary shaft around which the second movement belt 136b runs as described above, and conveys the second movement belt 136b by rotation operation. Drive of the second driving motor 137b is controlled by the correction control apparatus 24 (to be described later). The second driving motor 137b is able to convey the second movement belt 136b in the forward direction or in the backward direction by forward rotation or backward rotation. With this configuration, it is possible to move the intermediate stage 132 in the Y direction and move the head holding member 134 in the X direction.

The first driven pulley 138a and the fourth driven pulley 138d are pulleys around which the first movement belt 136a runs as described above and are able to perform operation of conveying the first movement belt 136a by drive of the first driving motor 137a. The second driven pulley 138b and the third driven pulley 138c are pulleys around which the second movement belt 136b runs as described above and are able to perform operation of conveying the second movement belt 136b by drive of the second driving motor 137b. The first driven pulley 138a, the second driven pulley 138b, the third driven pulley 138c, and the fourth driven pulley 138d are fixed to the intermediate stage 132 as illustrated in FIG. 9.

Operation of movement of the inkjet head 14 in the X direction by the correction apparatus 13 will be described below with reference to FIG. 10.

The correction apparatus 13, when moving the inkjet head 14 in the X direction, rotates the first driving motor 137a and the second driving motor 137b in the same rotation direction. For example, as illustrated in FIG. 10, when moving the inkjet head 14 rightward in the X direction, the correction apparatus 13 rotates the first driving motor 137a and the second driving motor 137b clockwise. In this case, with the clockwise rotation operation of the first driving motor 137a, the connecting unit 135d to which the end of the first movement belt 136a is connected is applied with a rightward force in the X direction by the first movement belt 136a as illustrated in FIG. 10. In contrast, with the clockwise rotation operation of the second driving motor 137b, the connecting unit 135c to which the end of the second movement belt 136b is connected is applied with a rightward force in the X direction by the first movement belt 136a as illustrated in FIG. 10. With this configuration, the head holding member 134 moves rightward in the X direction along the X-direction movement guide, so that the inkjet head 14 moves rightward in the X direction.

Meanwhile, based on the similar operating principle, by counterclockwise rotation of the first driving motor 137a and the second driving motor 137b, the head holding member 134 moves leftward in the X direction along the X-direction movement guide 133, so that the inkjet head 14 moves leftward in the X direction.

Operation of movement of the inkjet head 14 in the Y direction by the correction apparatus 13 will be described below with reference to FIG. 11.

The correction apparatus 13, when moving the inkjet head 14 in the Y direction, rotates the first driving motor 137a and the second driving motor 137b in different rotation directions. For example, as illustrated in FIG. 11, when moving the inkjet head 14 downward in the Y direction, the correction apparatus 13 rotates the first driving motor 137a clockwise and rotates the second driving motor 137b counterclockwise.

In this case, with the clockwise rotation operation of the first driving motor 137a, the first movement belt 136a is sent to the connecting unit 135a, whereas the connecting unit 135d to which the end of the first movement belt 136a is connected is applied with a rightward force in the X direction, and the force acts as downward force in the Y direction with respect to the first movement belt 136a that runs around the fourth driven pulley 138d and extends downward in the Y direction. As a result, as illustrated in FIG. 11, the fourth driven pulley 138d is applied with a downward force in the Y direction by the first movement belt 136a.

Furthermore, with the counterclockwise rotation operation of the second driving motor 137b, the second movement belt 136b is sent to the connecting unit 135c, whereas the connecting unit 135b to which the end of the second movement belt 136b is connected is applied with a leftward force in the X direction, and the force acts as downward force in the Y direction with respect to the second movement belt 136b that runs around the second driven pulley 138b and extends downward in the Y direction. As a result, as illustrated in FIG. 11, the second driven pulley 138b is applied with a downward force in the Y direction by the second movement belt 136b.

As described above, the fourth driven pulley 138d and the second driven pulley 138b are applied with the downward force in the Y direction, so that the intermediate stage 132 moves downward in the Y direction along the Y-direction movement guide 131, and the inkjet head 14 accordingly moves downward in the Y direction. Furthermore, the X-directional force applied to the connecting unit 135d and the X-directional force applied to the connecting unit 135b have the same magnitude in opposite directions, and therefore, the inkjet head 14 does not move in the X direction.

Meanwhile, based on the similar operating principle, by rotating the first driving motor 137a counterclockwise and rotating the second driving motor 137b clockwise, the intermediate stage 132 moves upward in the Y direction along the Y-direction movement guide 131, so that the inkjet head 14 moves upward in the Y direction.

Furthermore, it is possible to cause the inkjet head 14 to move in the X direction and the Y direction at the same time, that is, move in a diagonal direction, by a certain combination of the rotation directions and rotation amounts (rotation speeds) of the first driving motor 137a and the second driving motor 137b.

With the configuration of the correction apparatus 13 as described above, when the inkjet head 14 is caused to perform scanning (movement) in the extending direction by operation of the shape tracking apparatus 12, it is possible to move the inkjet head 14 in the X direction and the Y direction so as to cancel out oscillation of the inkjet head 14 that occurs. With this configuration, it is possible to prevent oscillation of the inkjet head 14 due to the scanning operation of the inkjet head 14, and it is possible to improve painting accuracy with respect to the target object 40.

Furthermore, for example, the correction apparatus 13 may be configured using X-Y stages or the like to move the inkjet head 14 in the X direction and the Y direction; however, in this case, the stage in the X direction is mounted on the stage in the Y direction, so that the size of the correction apparatus 13 increases in a height direction. In contrast, when the correction apparatus 13 is configured using the belts and the pulleys as illustrated in FIG. 8 and FIG. 9 as described above, it is possible to reduce the size and a weight of the correction apparatus 13, it is possible to implement fine correction operation, and it is possible to realize a simple configuration.

Meanwhile, in the configuration of the correction apparatus 13 illustrated in FIG. 8 and FIG. 9, the inkjet head 14 is configured to move in only the X direction and the Y direction, but embodiments are not limited to this example, and, for example, it may be possible to include a mechanism that allows the inkjet head 14 to move back and force in the Z direction.

Furthermore, the directions in which the correction apparatus 13 performs the correction operation are not limited to the X direction and the Y direction as illustrated in FIG. 8 to FIG. 11, but it may be possible to perform correction operation in different directions, and the two directions subjected to the correction operation need not always be orthogonal to each other.

Moreover, the configuration of the correction apparatus 13 is not limited to the example as illustrated in FIG. 8 and FIG. 9, but, for example, the base member 130 and the head holding member 134 may be connected by a link member, such as a parallel link robot (parallel three-point support structure), 3-PPR, 2-RRS, RRRU, 2-RPS, RPRU, or 3-RR. In this case, the link member supports the inkjet head 14 movably in the X direction and the Y direction. In this case, the correction operation by the correction apparatus 13 as described above may be implemented by drive of the link member.

### Scanning operation of inkjet head

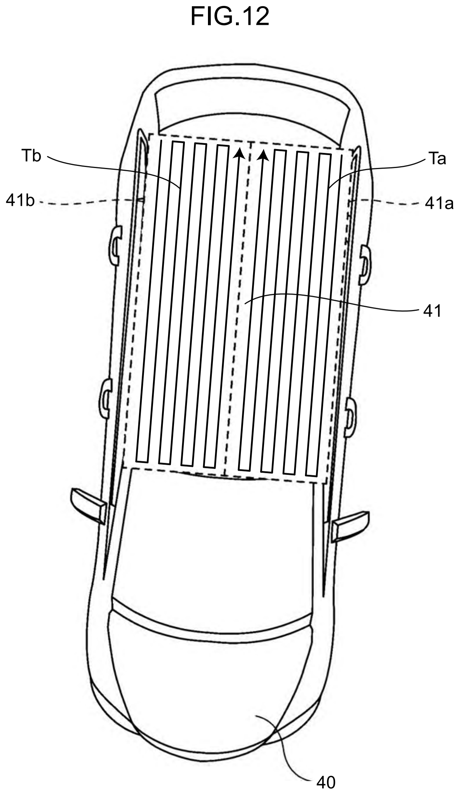

FIG. 12 is a diagram illustrating an example of scanning operation of the inkjet head of the liquid ejection apparatus according to the first embodiment. The scanning operation of the inkjet head 14 by the painting robot unit 10 according to the present embodiment will be described below with reference to FIG. 12. In FIG. 12, an automobile is illustrated as one example of the target object 40, and explanation will be given based on the assumption that a painting range 41 of the inkjet head 14 is a roof of the automobile.

The painting range 41 is a range in which each of the two painting robot units 10 (the painting robot units 10a and 10b) illustrated in FIG. 1 causes the inkjet head 14 to perform scanning and painting with respect to the target object 40. The painting ranges 41 (painting ranges 41a and 41b) and the scanning paths (scanning paths Ta and Tb) are different between the two inkjet heads 14.

The painting range 41a is a range on the target object 40 that is subjected to painting when the shape tracking apparatus 12a causes the inkjet head 14a that is held on a leading end of the shape tracking apparatus 12a via the correction apparatus 13a to perform scanning. The scanning path Ta indicates a path along which the inkjet head 14a performs scanning with respect to the target object 40.

The painting range 41b is a range on the target object 40 that is subjected to painting when the shape tracking apparatus 12b causes the inkjet head 14b that is held on a leading end of the shape tracking apparatus 12b via the correction apparatus 13a to perform scanning. The scanning path Tb indicates a path along which the inkjet head 14b performs scanning with respect to the target object 40.

As described above, the plurality of painting robot units 10 (the painting robot units 10a and 10b in the examples illustrated in FIG. 1 and FIG. 12) perform painting while causing the inkjet heads 14 to perform scanning in the respective painting ranges 41a and 41b, so that it is possible to perform painting in the entire painting range 41.

### Hardware configuration of painting system

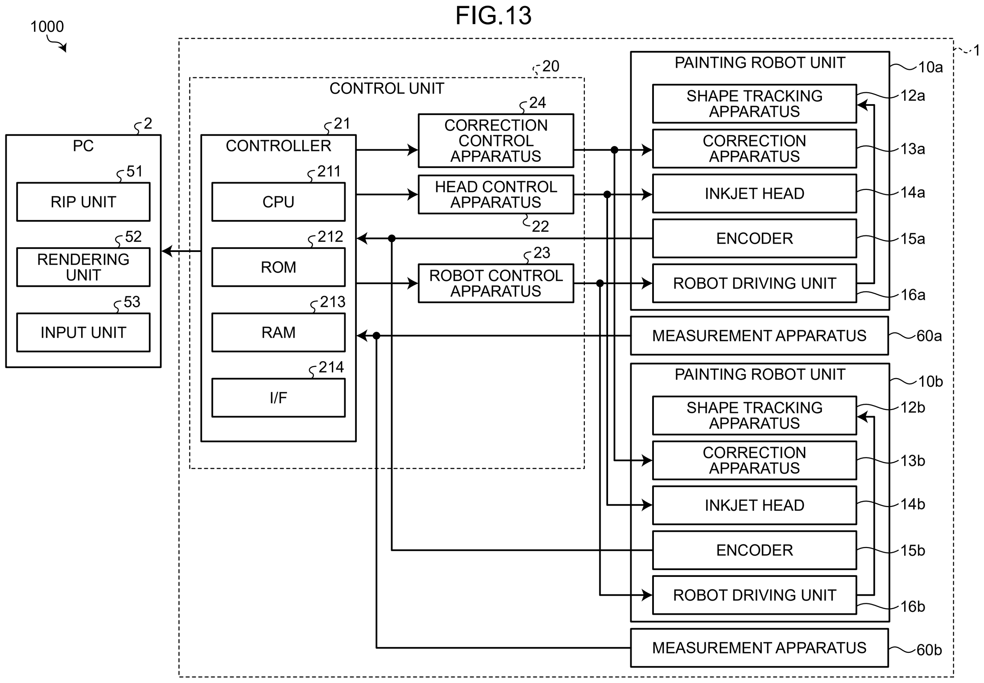

FIG. 13 is a diagram illustrating an example of a hardware configuration of the painting system according to the first embodiment. A hardware configuration of a painting system 1000 according to the present embodiment will be described below with reference to FIG. 13.

As illustrated in FIG. 13, the painting system 1000 includes the liquid ejection apparatus 1 and a Personal Computer (PC) 2.

The liquid ejection apparatus 1 includes, as illustrated in FIG. 13, the painting robot units 10a and 10b, the control unit 20, and the measurement apparatuses 60a and 60b. The painting robot unit 10a includes the shape tracking apparatus 12a, the correction apparatus 13a, the inkjet head 14a, an encoder 15a, and a robot driving unit 16a. The painting robot unit 10b similarly includes the shape tracking apparatus 12b, the correction apparatus 13b, the inkjet head 14b, an encoder 15b, and a robot driving unit 16b. Meanwhile, the shape tracking apparatuses 12a and 12b, the correction apparatuses 13a and 13b, and the inkjet heads 14a and 14b operate as described above.

The encoder 15a is, for example, a device that optically detects a slit that is arranged in each of rotary shafts of the shape tracking apparatus 12a. Further, the encoder 15a detects a position of each of the rotary shafts of the shape tracking apparatus 12a based on a rotation amount of each of the rotary shafts, and outputs a detection signal to a controller 21.

The robot driving unit 16a is a driving circuit that performs operation such that the shape tracking apparatus 12a is located at a desired position and has a desired posture in accordance with control of a robot control apparatus 23.

Meanwhile, operation of the encoder 15b and the robot driving unit 16b is the same as the operation of the encoder 15a and the robot driving unit 16a as described above.

The control unit 20 includes, as illustrated in FIG. 13, the controller 21, a head control apparatus 22, the robot control apparatus 23, and the correction control apparatus 24.

The controller 21 is a control apparatus that controls operation of the painting robot units 10a and 10b via the head control apparatus 22, the robot control apparatus 23, and the correction control apparatus 24. The controller 21 includes, as illustrated in FIG. 13, a Central Processing Unit (CPU) 211, a Read Only Memory (ROM) 212, a Random Access Memory (RAM) 213, and an interface (I/F) 214.

The CPU 211 is an arithmetic device that manages control of the controller 21. The ROM 212 is a non-volatile storage device that is able to store therein a program and data even when power of the controller 21 is turned off. The ROM 212 may be implemented by, for example, a Hard Disk Drive (HDD), a Solid State Drive (SSD), or the like. The RAM 213 is a volatile storage device that is used as a work area or the like for the CPU 211.

The I/F 214 is a communication interface for inputting and outputting characters, values, various kinds of instructions, and the like to and from an external apparatus, such as the PC 2. The I/F 214 is, for example, an interface compliant with Ethernet (registered trademark), TCP (Transmission Control Protocol)/IP (Internet Protocol), and the like.

The head control apparatus 22 is an apparatus that receives an ejection cycle signal that is output from the controller 21, and controls liquid ejection operation of the inkjet heads 14a and 14b based on the ejection cycle signal.

The robot control apparatus 23 is an apparatus that receives a synchronous control signal that is output from the controller 21, drives the robot driving units 16a and 16b, and controls operation of the shape tracking apparatuses 12a and 12b based on the synchronous control signal.

The correction control apparatus 24 is an apparatus that controls correction operation of the correction apparatuses 13a and 13b with respect to the inkjet heads 14a and 14b in accordance with control of the controller 21 (a correction control unit 508 (to be described later)).

Meanwhile, in the example illustrated in FIG. 13, the head control apparatus 22, the robot control apparatus 23, and the correction control apparatus 24 are shared by the painting robot unit 10a and the painting robot unit 10b, but embodiments are not limited to this example. In other words, the head control apparatus 22, the robot control apparatus 23, and the correction control apparatus 24 may be provided for each of the painting robot units 10.

Furthermore, the controller 21, the head control apparatus 22, the robot control apparatus 23, and the correction control apparatus 24 are configured as separate apparatuses in the control unit 20 illustrated in FIG. 13, but embodiments are not limited to this example. For example, at least some of the apparatuses as described above may be implemented as a single apparatus.

The measurement apparatus 60a is an apparatus that measures a movement state of the inkjet head 14a that is caused to perform scanning by the shape tracking apparatus 12a as described above. The measurement apparatus 60a acquires measurement data including three-dimensional information that indicates displacement of the inkjet head 14a in the X direction, the Y direction, and the Z direction. The measurement apparatus 60a outputs the acquired measurement data to the controller 21.

Meanwhile, the measurement apparatus 60b performs the same operation as the measurement apparatus 60a as described above, and measures a movement state of the inkjet head 14b.

The PC 2 is an information processing apparatus that performs image processing in accordance with a color profile or user setting, a rendering process with respect to painting data, and the like. The PC 2 includes, as illustrated in FIG. 13, a Raster Image Processor (RIP) unit 51, a rendering unit 52, and an input unit 53.

The RIP unit 51 is a functional unit that performs image processing in accordance with a color profile or user setting. The rendering unit 52 is a functional unit that decomposes painting data for performing painting on the target object 40 into image data for each scanning (for example, for each movement of the inkjet head 14 in a main-scanning direction). The input unit 53 is a device, such as a keyboard, a mouse, or a touch panel, for receiving operation of setting the painting data for performing painting on the target object 40, selecting a painting mode, setting a painting range (a painting start position and a painting end position), and a painting instruction.

Meanwhile, the RIP unit 51 and the rendering unit 52 need not always be included in the PC 2, but may be included in the controller 21 of the control unit 20.

Furthermore, the hardware configuration of the painting system 1000 illustrated in FIG. 13 is one example, and it may be possible to add different components.

### Functional block configuration and operation of controller of control unit

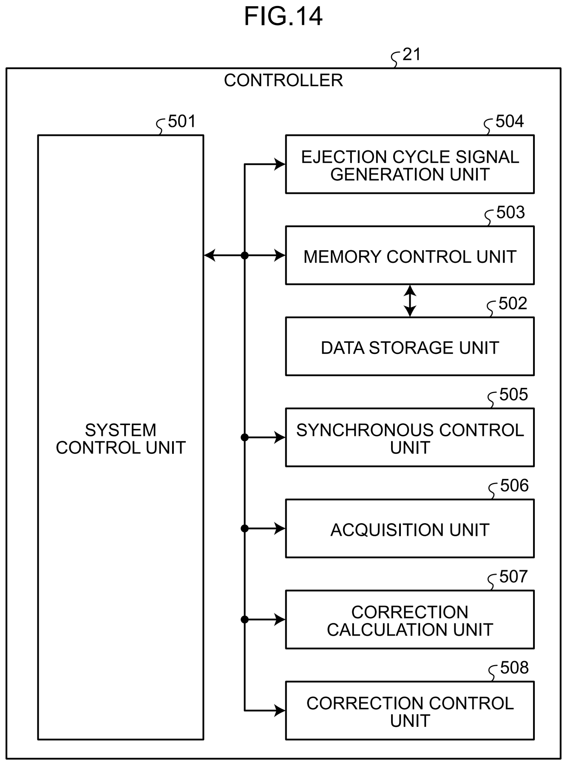

FIG. 14 is a diagram illustrating an example of a functional block configuration of a controller of a control unit of the liquid ejection apparatus according to the first embodiment. The functional block configuration and the operation of the controller 21 of the control unit 20 of the liquid ejection apparatus 1 according to the present embodiment will be described below with reference to FIG. 14.

As illustrated in FIG. 14, the controller 21 of the control unit 20 of the liquid ejection apparatus 1 includes a system control unit 501, a data storage unit 502, a memory control unit 503, an ejection cycle signal generation unit 504, a synchronous control unit 505, an acquisition unit 506, a correction calculation unit 507 (calculation unit), and the correction control unit 508.

The system control unit 501 is a functional unit that controls overall operation of the painting robot unit 10 using image data of a painting target that is received from the PC 2 via the I/F 214.

The data storage unit 502 is a functional unit that stores therein the image data received from the PC 2 via the I/F 214, painting range data for defining a painting range, a program, and the like. The data storage unit 502 is implemented by the ROM 212 and the RAM 213 as illustrated in FIG. 13.

The memory control unit 503 is a functional unit that controls data read from the data storage unit 502, data write to the data storage unit 502, and the like.

The ejection cycle signal generation unit 504 is a functional unit that generates an ejection cycle signal related to liquid ejection from the inkjet head 14, based on detection signals received from the encoders 15a and 15b, and information indicating resolution of the image data that is received from the PC 2 via the I/F 214. The ejection cycle signal generation unit 504 outputs the generated ejection cycle signal to the head control apparatus 22.

The synchronous control unit 505 is a functional unit that generates a synchronous control signal for synchronizing operation of the shape tracking apparatus 12 and liquid ejection operation of the inkjet head 14. The synchronous control unit 505 outputs the generated synchronous control signal to the robot control apparatus 23.

The acquisition unit 506 is a functional unit that acquires measurement data that indicates movement operation of the inkjet head 14 and that is measured by the measurement apparatus 60. Meanwhile, the measurement apparatus 60 may be directly connected to the control unit 20, and the acquisition unit 506 may directly acquire the measurement data from the measurement apparatus 60. Further, the acquisition unit 506 may acquire the measurement data measured by the measurement apparatus 60, via a storage medium, such as a Universal Serial Bus (USB) memory.

The correction calculation unit 507 is a functional unit that calculates an amount of deviation from an ideal trajectory of the inkjet head 14, based on the measurement data that is acquired by the acquisition unit 506.

The correction control unit 508 is a functional unit that generates correction data for causing the correction apparatus 13 to perform correction operation in an opposite phase with respect to the amount of deviation of the inkjet head 14, which is calculated by the correction calculation unit 507. Further, when the shape tracking apparatus 12 causes the inkjet head 14 to move (perform scanning), the correction control unit 508 causes the correction apparatus 13 to perform operation via the correction control apparatus 24 based on the correction data. Specifically, the correction control unit 508 outputs the generated correction data to the correction control apparatus 24, and the correction control apparatus 24 causes the correction apparatus 13 to perform correction operation so as to cancel out oscillation of the inkjet head 14 based on the correction data.

Meanwhile, it may be possible to adopt a configuration in which, while the measurement apparatus 60 is measuring operation of the inkjet head 14, the acquisition unit 506 acquires the measurement data measured by the measurement apparatus 60, the correction calculation unit 507 calculates the amount of deviation based on the measurement data that is acquired by the acquisition unit 506, and the correction control unit 508 generates the correction data for performing correction in response to the amount of deviation. Further, the acquisition unit 506 may acquire measurement data that is measured in advance by the measurement apparatus 60.

The system control unit 501, the data storage unit 502, the memory control unit 503, the synchronous control unit 505, the acquisition unit 506, the correction calculation unit 507, and the correction control unit 508 as described above are implemented by, for example, causing the CPU 211 illustrated in FIG. 13 to execute a program that is stored in the memory control unit 503. Meanwhile, at least a part of the system control unit 501, the data storage unit 502, the memory control unit 503, the synchronous control unit 505, the acquisition unit 506, the correction calculation unit 507, and the correction control unit 508 may be implemented by a hardware circuit, such as a Field-Programmable Gate Array (FPGA) or an Application Specific Integrated Circuit (ASIC).

Meanwhile, each of the functional units of the controller 21 illustrated in FIG. 14 is presented to schematically illustrate the functions, and need not always be configured in the same manner. In other words, each of the functional units of the controller 21 need not always be configured as a specific software module as a block illustrated in FIG. 14 as long as the functions of each of the functional units are implemented as a whole by causing the CPU 211 of the controller 21 to execute a program. For example, a plurality of independent functional units of the controller 21 illustrated in FIG. 14 may be configured as a single functional unit. Alternatively, functions included in the single functional unit of the controller 21 illustrated in FIG. 14 may be divided into a plurality of parts and configured as a plurality of functional units.

### Correction data generation operation of liquid ejection apparatus

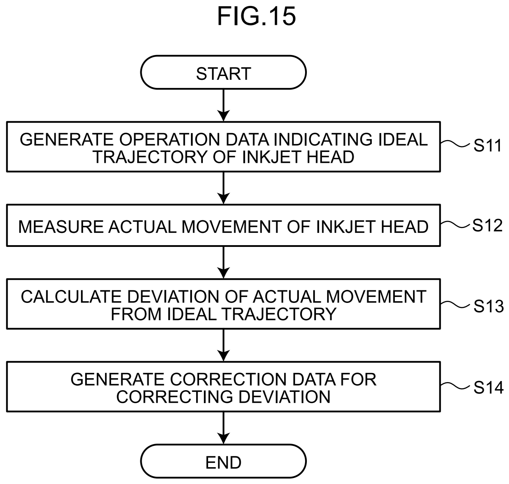

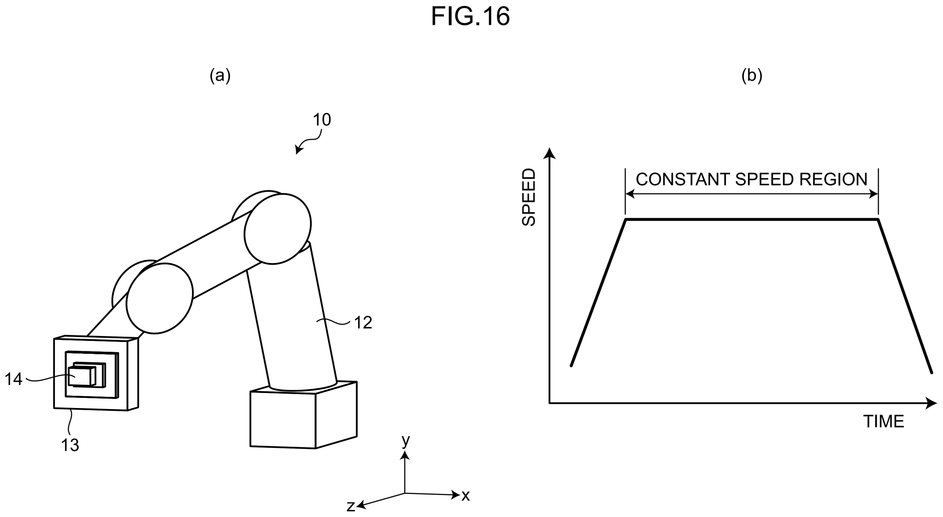

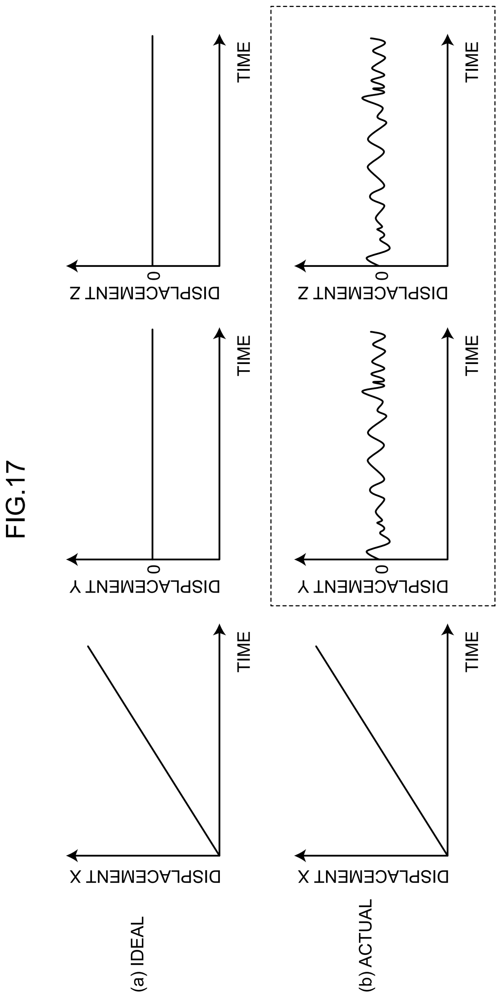

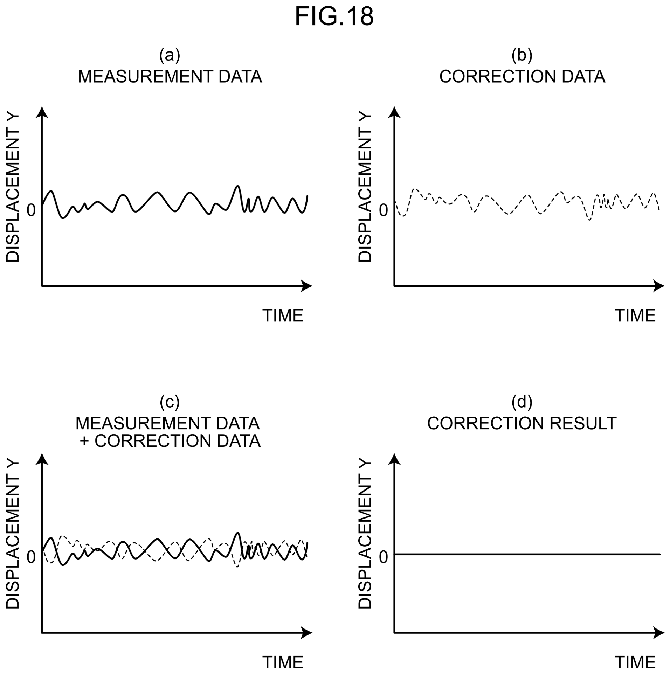

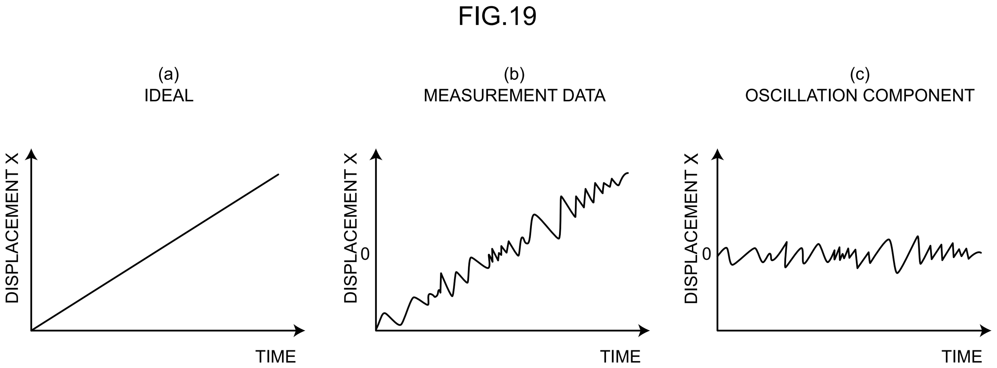

FIG. 15 is a flowchart illustrating an example of the flow of correction data generation operation of the liquid ejection apparatus according to the first embodiment. FIG. 16 is a diagram for explaining a speed change when the inkjet head is caused to perform scanning in a predetermined direction in the liquid ejection apparatus according to the first embodiment. FIG. 17 is a graph illustrating an example of ideal operation (movement of the inkjet head along a path that is determined in advance) and actual operation of the inkjet head in the liquid ejection apparatus according to the first embodiment. FIG. 18 is a graph illustrating an example of correction data and a correction result generated by the liquid ejection apparatus according to the first embodiment. FIG. 19 is a graph illustrating an example of oscillation of the inkjet head in a scanning direction in the liquid ejection apparatus according to the first embodiment. With reference to FIG. 15 to FIG. 19, the flow of the correction data generation operation performed by the liquid ejection apparatus 1 according to the present embodiment will be described.

### Step S11

Firstly, when the shape tracking apparatus 12 causes the inkjet head 14 to perform movement (scanning) relative to the target object 40, the shape tracking apparatus 12 generates, in advance, operation data for causing the inkjet head 14 to move along an ideal trajectory. The shape tracking apparatus 12 may generate the operation data by hand teaching performed by a user or by simulation using offline teaching software. Then, the process goes to Step S12.

### Step S12

Subsequently, the measurement apparatus 60 measures a movement state of the inkjet head 14 that is moved by the shape tracking apparatus 12 in accordance with the operation data. Then, the measurement apparatus 60 acquires measurement data that indicates the movement state of the inkjet head 14, and outputs the measurement data to the controller 21. Thereafter, the acquisition unit 506 of the controller 21 acquires the measurement data.

Meanwhile, when causing the inkjet head 14 to perform operation in accordance with the operation data, it is desirable to cause the inkjet head 14, which is to be actually used, to perform operation and cause the inkjet head 14 to carry a painting material or the like to realize weight that is close to actual weight.

Further, for example, when the shape tracking apparatus 12 causes the inkjet head 14 to perform scanning in the X direction as illustrated in FIG. 16(a), the inkjet head 14 goes through an acceleration region from an operation start point, reaches a constant speed region in which the speed is constant, goes through a deceleration region when the inkjet head 14 stops at an operation end position, and stops in an example illustrated in FIG. 16(b). In FIG. 17 to FIG. 19, explanation will be given based on the assumption that the inkjet head 14 moves in the X direction and in the constant speed region illustrated in FIG. 16(b). Further, explanation will be given based on the assumption that the correction apparatus 13 is able to perform correction operation in the Y direction and the Z direction. In this case, with respect to ideal displacement (ideal trajectory) of the inkjet head 14 in the X direction, the Y direction, and the Z direction as illustrated in FIG. 17(a), an actual trajectory of the inkjet head 14 is, as illustrated in FIG. 17(b) for example, a trajectory with oscillation deviated from the ideal trajectory in the Y direction and the Z direction. The actual trajectory with oscillation deviated from the ideal trajectory as described above is included in the measurement data that is measured by the measurement apparatus 60.

Then, the process goes to Step S13.

### Step S13

The correction calculation unit 507 of the controller 21 calculates an amount of deviation of the actual trajectory deviated from the ideal trajectory of the inkjet head 14 indicated by the operation data as described above, based on the measurement data that is acquired by the acquisition unit 506. Meanwhile, the correction calculation unit 507 may calculate the amount of deviation based on the measurement data by the external PC 2 through an offline process, instead of the controller 21. Then, the process goes to Step S14.

### Step S14

The correction control unit 508 of the controller 21 generates correction data for causing the correction apparatus 13 to perform correction operation in an opposite phase with respect to the amount of deviation from the ideal trajectory of the inkjet head 14, which is calculated by the correction calculation unit 507. For example, when the measurement data indicates displacement as illustrated in FIG. 18(a) in the Y direction of the inkjet head 14, the correction control unit 508 generates correction data as illustrated in FIG. 18(b) that causes the correction apparatus 13 to perform correction operation in the Y direction in an opposite phase with respect to the amount of deviation in the Y direction, and that is indicated by the measurement data. Here, FIG. 18(c) indicates that the correction data generated by the correction control unit 508 is data in an opposite phase with respect to the measurement data.

Meanwhile, when the correction calculation unit 507 calculates the amount of deviation in real time, the correction control unit 508 may generate the correction data in real time.

The correction data generation operation in the flow from Step S11 to Step S14 as described above is preparation operation that is performed in advance of painting that is performed on the target object 40 by the liquid ejection apparatus 1. Further, when the shape tracking apparatus 12 causes the inkjet head 14 to move (perform scanning) at the time of actual painting on the target object 40, the correction control unit 508 causes the correction apparatus 13 to perform operation via the correction control apparatus 24 based on the correction data. With this configuration, as illustrated in FIG. 18(d), oscillation of the inkjet head 14 in the Y direction in the scanning operation of the inkjet head 14 is cancelled out. In other words, oscillation occurs in the shape tracking apparatus 12, but deviation of the inkjet head 14 from the ideal trajectory is cancelled out by the correction operation performed by the correction apparatus 13, so that it is possible to realize linear operation. Meanwhile, the correction operation is performed in the same manner in the Z direction.

Meanwhile, in the example illustrated in FIG. 17(b), it is assumed that actual displacement does not deviate from ideal displacement (ideal trajectory) in the X direction that is the scanning direction of the inkjet head 14; however, in reality, it is expected that a trajectory that includes oscillation and that is deviated from the ideal trajectory is observed as indicated by measurement data in FIG. 19(b), instead of ideal displacement in the X direction as illustrated in FIG. 19(a). Even in this case, the correction calculation unit 507 is able to calculate the amount of deviation that is an oscillation component illustrated in FIG. 19(c) by calculating a difference between the measurement data and the operation data indicating the ideal trajectory.

As described above, in the liquid ejection apparatus 1 according to the present embodiment, the inkjet head 14 ejects liquid to the target object 40, the shape tracking apparatus 12 serving as a tracking unit causes the inkjet head 14 to track the surface of the target object 40, the shape tracking apparatus 12 serving as a conveying unit moves the inkjet head 14 relative to the target object 40, the measurement apparatus 60 measures operation of the relative movement by the shape tracking apparatus 12 (in this example, movement of the inkjet head 14), and the correction apparatus 13 corrects relative positions of the inkjet head 14 and the target object 40 at the time of relative movement by the shape tracking apparatus 12 based on a measurement result obtained by the measurement apparatus 60. With this configuration, it is possible to prevent oscillation of the inkjet head 14 that occurs when the inkjet head 14 moves, and it is possible to improve painting accuracy.

Furthermore, in the liquid ejection apparatus 1 according to the present embodiment, the correction apparatus 13 includes the base member 130, the intermediate stage 132 that is held movably in the Y direction relative to the base member 130, the Y-direction movement guide 131 that is fixed to one of the base member 130 and the intermediate stage 132 and that guides the intermediate stage 132 movably in the Y direction relative to the base member 130, the head holding member 134 that holds the inkjet head 14, and the X-direction movement guide 133 that is fixed to one of the intermediate stage 132 and the head holding member 134 and supports the head holding member 134 movably in the X direction relative to the intermediate stage 132. With the correction apparatus 13 that is configured as described above, it is possible to realize correction operation for preventing oscillation of the inkjet head 14 caused by scanning operation of the inkjet head 14.

Moreover, in the liquid ejection apparatus 1 according to the present embodiment, the correction apparatus 13 is configured using the belt and the pulley as described above, so that it is possible to reduce a size and a weight of the correction apparatus 13, it is possible to implement fine correction operation, and it is possible to realize a simple configuration.

### First modification

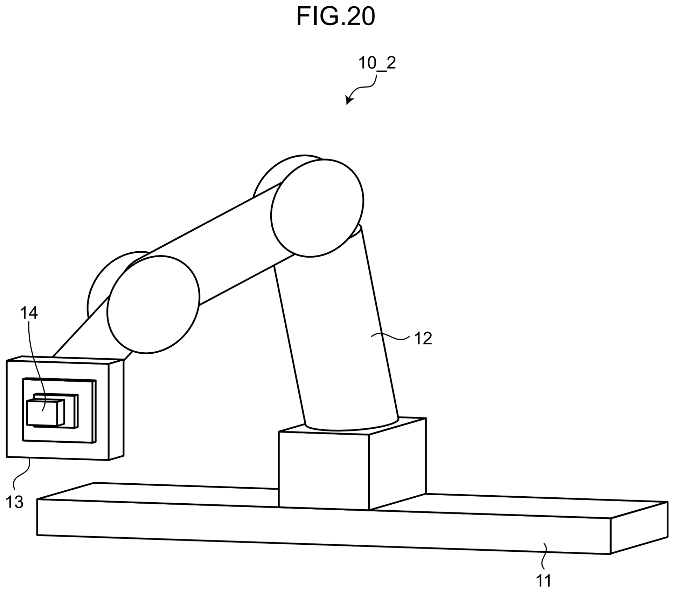

FIG. 20 is a diagram illustrating an example of a configuration of a painting robot unit according to a first modification of the first embodiment. With reference to FIG. 20, a configuration of a painting robot unit 10_2 according to the first modification of the first embodiment will be described below.

In the liquid ejection apparatus 1 according to the first embodiment as described above, it is possible to adopt the painting robot unit 10_2 as illustrated in FIG. 20 instead of or in addition to the painting robot unit 10. The painting robot unit 10_2 includes, as illustrated in FIG. 20, a conveying apparatus 11, the shape tracking apparatus 12, the correction apparatus 13, and the inkjet head 14. The conveying apparatus 11 is a slider apparatus, such as a single-axis robot, that supports the shape tracking apparatus 12, on which the correction apparatus 13 and the inkjet head 14 are mounted, such that the shape tracking apparatus 12 is able to move back and force (perform scanning) in one direction. Meanwhile, in the present embodiment, the conveying apparatus 11 allows the shape tracking apparatus 12, on which the correction apparatus 13 and the inkjet head 14 are mounted, to move back and force in an extending direction of the target object 40. The conveying apparatus 11 is fixed to ground or the like. The conveying apparatus 11 has a function to cause the inkjet head 14 to perform scanning along the surface of the target object 40 when painting is performed on the target object 40 by the inkjet head 14, and is one example of the "conveying unit" according to the present invention. Meanwhile, scanning performed by the inkjet head 14 by the conveying apparatus 11 is one example of operation of moving the inkjet head 14 relative to the target object 40.

The shape tracking apparatus 12 is an apparatus, such as an articulated robot, for determining a distance and an angle of the inkjet head 14 relative to the surface of the target object 40. The shape tracking apparatus 12 includes a link and a joint, and is arranged on the conveying apparatus 11 so as to be able to move back and force in one direction. Further, by rotating or displacing the link and the joint, the shape tracking apparatus 12 is able to change relative positions and relative inclination between the inkjet head 14 and the target object 40, change the liquid ejection direction of the inkjet head 14, and cause the nozzle surface of the inkjet head 14 to face the target object 40. In other words, the shape tracking apparatus 12 has a function to cause the inkjet head 14 to track the surface of the target object 40, and is one example of the "tracking unit" according to the present invention. Furthermore, as illustrated in FIG. 20, the shape tracking apparatus 12 holds the correction apparatus 13 in which the inkjet head 14 is mounted at the side of the leading end of the arm structure. Specifically, when the conveying apparatus 11 causes the inkjet head 14 to perform scanning, the shape tracking apparatus 12 maintains the predetermined distance and the predetermined angle of the inkjet head 14 relative to the surface of the target object 40, that is, causes the inkjet head 14 to track the surface of the target object 40. The shape tracking apparatus 12, in principle, does not perform operation and is fixed when the conveying apparatus 11 causes the inkjet head 14 to perform scanning. For example, when painting is performed on a planar surface of the target object 40, the shape tracking apparatus 12 fixes the inkjet head 14 in advance so as to maintain the predetermined distance and the predetermined angle of the inkjet head 14 relative to the surface of the target object 40 at the time of scanning of the inkjet head 14 by the conveying apparatus 11. Specifically, the shape tracking apparatus 12 fixes the inkjet head 14 so as to prevent at least rolling and yawing in the scanning direction of the inkjet head 14, in addition to preventing movement of the inkjet head 14 in the X direction and the Y direction as illustrated in FIG. 8, for example. With this configuration, it is possible to prevent occurrence of an unwanted line or the like, and it is possible to improve painting quality. Meanwhile, when painting is performed on a non-planar surface of the target object 40, the shape tracking apparatus 12 may control the position and the angle of the inkjet head 14 such that the inkjet head 14 tracks the surface of the target object 40 while the conveying apparatus 11 is causing the inkjet head 14 to perform scanning.

By realizing the positional relationship between the conveying apparatus 11 and the shape tracking apparatus 12 as described above, that is, by fixing the conveying apparatus 11 that is an apparatus having a larger movable range and a larger size than the shape tracking apparatus 12 onto ground or the like, it is possible to achieve mechanical rigidity, so that it is possible to prevent oscillation at the time of scanning by the inkjet head 14 and it is possible to perform painting on the target object 40 with an increased size.

The correction apparatus 13 is, as illustrated in FIG. 20, an apparatus that is mounted at the side of the leading end of the arm structure of the shape tracking apparatus 12, holds the inkjet head 14, and controls (corrects) the position and the posture of the inkjet head 14 so as to cancel out oscillation of the inkjet head 14. Specifically, the correction apparatus 13 corrects the position and the posture of the inkjet head 14 so as to cancel out oscillation of the inkjet head 14 that may occur when the conveying apparatus 11 causes the inkjet head 14 to perform scanning. In other words, the correction apparatus 13 corrects relative positions between the inkjet head 14 and the target object 40.

Even in the painting robot unit 10_2 according to the present modification as described above, it is possible to prevent oscillation of the inkjet head 14 that occurs when the inkjet head 14 moves, and it is possible to improve painting accuracy.

### Second modification

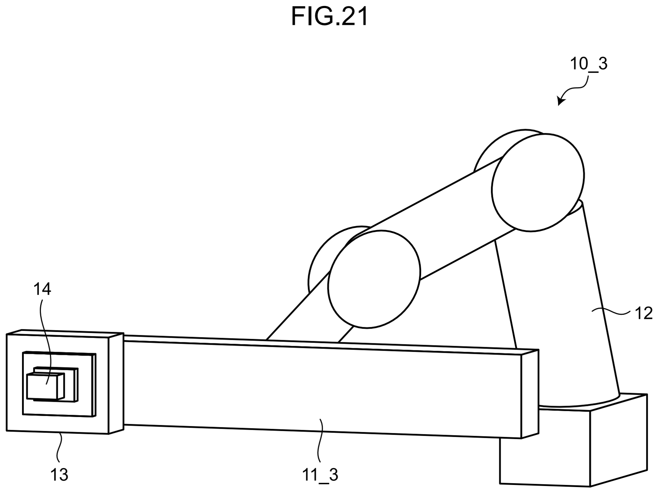

FIG. 21 is a diagram illustrating an example of a configuration of a painting robot unit according to a second modification of the first embodiment. With reference to FIG. 21, a configuration of the painting robot unit 10_3 according to the second modification of the first embodiment will be described.

In the liquid ejection apparatus 1 according to the first embodiment as described above, it is possible to adopt the painting robot unit 10_3 as illustrated in FIG. 21 instead of or in addition to the painting robot unit 10. The painting robot unit 10_3 includes, as illustrated in FIG. 21, the shape tracking apparatus 12, a conveying apparatus 11_3, the correction apparatus 13, and the inkjet head 14.

The shape tracking apparatus 12 is an apparatus, such as an articulated robot, for determining a distance and an angle of the inkjet head 14 relative to the surface of the target object 40. The shape tracking apparatus 12 holds the conveying apparatus 11_3 at the side of the leading end of the arm structure as illustrated in FIG. 21. The shape tracking apparatus 12 is fixed to ground or the like.

The conveying apparatus 11_3 is, as illustrated in FIG. 21, a slider apparatus, such as a single-axis robot, that causes the inkjet head 14 held by the correction apparatus 13 to move back and force (perform scanning) in one direction. Specifically, the conveying apparatus 11_3 supports the correction apparatus 13 holding the inkjet head 14 such that the correction apparatus 13 is able to move back and force in one direction. Meanwhile, in the present embodiment, the conveying apparatus 11_3 allows the correction apparatus 13 and the inkjet head 14 to move back and force in the extending direction of the target object 40. Further, scanning of the inkjet head 14 by the conveying apparatus 11_3 is one example of operation of moving the inkjet head 14 relative to the target object 40.

The correction apparatus 13 is an apparatus that holds the inkjet head 14 and controls (corrects) a position and a posture of the inkjet head 14 so as to cancel out oscillation of the inkjet head 14. The correction apparatus 13 is installed in the conveying apparatus 11_3 so as to be able to move back and force in one direction.

Specifically, as compared to the painting robot unit 10_2 of the liquid ejection apparatus 1 according to the first modification as described above, in the painting robot unit 10_3, positions of the conveying apparatus 11 (the conveying apparatus 11_3 in the painting robot unit 10_3) and the shape tracking apparatus 12 are interchanged with each other. Even in the painting robot unit 10_3 as described above, the shape tracking apparatus 12, in principle, does not perform operation and is fixed when the conveying apparatus 11_3 causes the inkjet head 14 to perform scanning. In this manner, at the time of scanning of the inkjet head 14, by fixing operation of the shape tracking apparatus 12 and causing the correction apparatus 13 to perform correction operation with respect to the inkjet head 14, it is possible to cancel out oscillation of the inkjet head 14 and realize stable painting quality.

Furthermore, in the configuration of the painting robot unit 10_3, the conveying apparatus 11_3 is held by the shape tracking apparatus 12 that is fixed to ground, so that the shape tracking apparatus 12 is able to freely set a moving direction (conveying direction) of the conveying apparatus 11_3. With this configuration, it is possible to flexibly cope with painting on the target object 40 that has a complicated surface shape.

### Second embodiment

A liquid ejection apparatus 1 according to a second embodiment will be described below mainly in terms of differences from the liquid ejection apparatus 1 according to the first embodiment. In the first embodiment, the operation has been described in which painting is performed on the target object 40 by causing the inkjet head 14 that is held by the correction apparatus 13 to perform scanning by the shape tracking apparatus 12. In the second embodiment, operation will be described in which painting is performed on the target object 40 by causing the target object 40 to perform scanning with respect to a fixed inkjet head. Meanwhile, a hardware configuration of a painting system 1000 and a functional block configuration of a controller 21 according to the second embodiment are the same as those of the first embodiment as described above.

### Configuration of painting robot unit

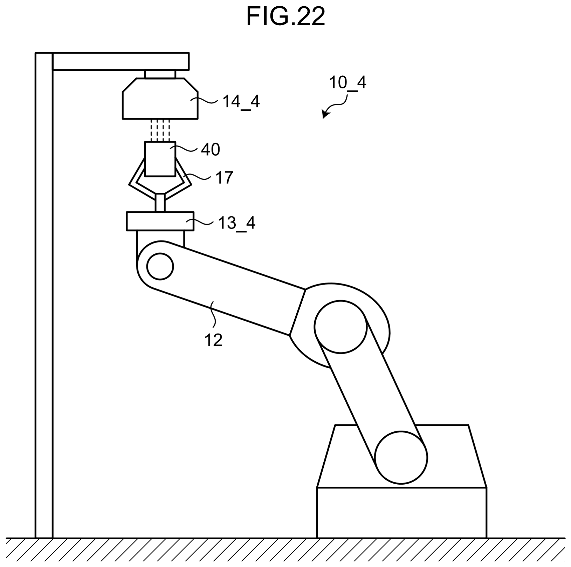

FIG. 22 is a diagram illustrating an example of a configuration of a painting robot unit according to the second embodiment. With reference to FIG. 22, a configuration of a painting robot unit 10_4 according to the second embodiment will be described.

The painting robot unit 10_4 is different from the first embodiment in that an inkjet head 14_4 is fixed and painting is performed by moving the target object 40. The painting robot unit 10_4 includes, as illustrated in FIG. 22, the shape tracking apparatus 12, a correction apparatus 13_4, a hand unit 17, and the inkjet head 14_4.

As illustrated in FIG. 22, the correction apparatus 13_4 is an apparatus that is mounted at the side of the leading end of the arm structure of the shape tracking apparatus 12, holds the hand unit 17 that grips the target object 40, and controls (corrects) a position and a posture of the target object 40 so as to cancel out oscillation of the target object 40.

The hand unit 17 is a member that is held by the correction apparatus 13_4 and grips the target object 40.

The inkjet head 14_4 is a liquid ejection head that includes a nozzle surface on which a plurality of nozzles for ejecting liquid, such as ink, are formed, and is fixed to a support or the like as illustrated in FIG. 22.

Meanwhile, other configurations of the painting robot unit 10_4 are the same as those of the painting robot unit 10 according to the first embodiment as described above.

In the painting robot unit 10_4 as described above, the shape tracking apparatus 12 determines a position of the inkjet head 14_4 so as to realize an appropriate position and appropriate posture of the target object 40, and thereafter, the shape tracking apparatus 12 causes the target object 40 to perform scanning with respect to the inkjet head 14_4, so that the target object 40 is painted. Meanwhile, scanning of the target object 40 by the shape tracking apparatus 12 is one example of operation of moving the inkjet head 14_4 relative to the target object 40.

Furthermore, in the liquid ejection apparatus 1 according to the second embodiment, the measurement apparatus 60 measures a movement state of the target object 40 that is caused to perform scanning by the shape tracking apparatus 12. Moreover, the measurement apparatus 60 outputs measurement data that is obtained by measurement to the control unit 20. Furthermore, the control unit 20 generates correction data for causing the correction apparatus 13_4 to perform correction operation so as to cancel out oscillation of the target object 40, based on the measurement data on the target object 40, which is measured by the measurement apparatus 60.

In the painting robot unit 10_4 according to the second embodiment as described above, by preventing oscillation of the target object 40 at the time of scanning of the target object 40, it is possible to prevent oscillation of the inkjet head 14_4 that occurs when the inkjet head 14_4 moves and it is possible to improve painting accuracy.

Meanwhile, it is preferable to adopt the painting robot unit 10_4 according to the second embodiment when a weight and a size of the target object 40 are small enough to move the target object 40 by the shape tracking apparatus 12. Furthermore, as a liquid ejection method according to the second embodiment, it is possible to adopt the same method as the first embodiment.

### Third embodiment

A liquid ejection apparatus 1 according to a third embodiment will be described below mainly in terms of differences from the liquid ejection apparatus 1 according to the first embodiment. In the first embodiment, the operation has been described in which the shape tracking apparatus 12, such as an articulated robot, causes the inkjet head 14 to perform scanning. In the second embodiment, a configuration and operation in the case where a Cartesian robot is used as the shape tracking apparatus. Meanwhile, a hardware configuration of a painting system 1000 and a functional block configuration of a controller 21 according to the third embodiment are the same as those of the first embodiment as described above.

### Configuration of painting robot unit

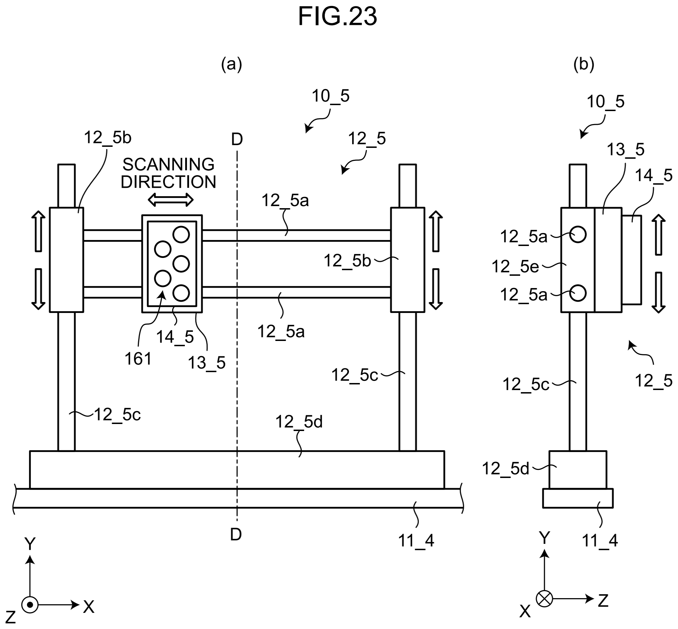

FIG. 23 is a diagram illustrating an example of a configuration of a painting robot unit according to the third embodiment. With reference to FIG. 23, a configuration of a painting robot unit 10_5 according to the third embodiment will be described. FIG. 23(a) is a front view of the painting robot unit 10_5 (viewed in the Z direction), and FIG. 23(b) is a cross-sectional view of the painting robot unit 10_5 taken along a line D-D.

The painting robot unit 10_5 is different from the first embodiment in that a shape tracking apparatus 12_5 that is a Cartesian robot is used instead of the shape tracking apparatus 12 in the painting robot unit 10 according to the first embodiment. The painting robot unit 10_5 includes, as illustrated in FIG. 23, the shape tracking apparatus 12_5, a correction apparatus 13_5, and an inkjet head 14_5.

The shape tracking apparatus 12_5 is a Cartesian robot that determines a distance and an angle of the inkjet head 14_5 relative to the surface of the target object 40, and supports the correction apparatus 13_5 holding the inkjet head 14_5 such that the correction apparatus 13_5 is able to move back and forth (scanning) in a predetermined direction. The shape tracking apparatus 12_5 is fixed to ground or the like. The shape tracking apparatus 12_5 has a function to cause the inkjet head 14_5 to perform scanning along the surface of the target object 40 when painting is performed on the target object 40 by the inkjet head 14_5. Meanwhile, scanning of the inkjet head 14_5 by the shape tracking apparatus 12_5 is one example of operation of moving the inkjet head 14_5 relative to the target object 40.

The shape tracking apparatus 12_5 includes, as illustrated in FIG. 23, a first guide unit 12_5a, a fixed guide unit 12_5b, a second guide unit 12_5c, a base unit 12_5d, and a fixing unit 12_5e.

The first guide unit 12_5a is a member that supports the fixing unit 12_5e on which the correction apparatus 13_5 is fixed movably in the X direction. The fixed guide unit 12_5b is a member that supports the first guide unit 12_5a. The second guide unit 12_5c is a member that supports the fixed guide unit 12_5b movably in the Y direction (vertical direction). The base unit 12_5d is a base member that fixedly supports the second guide unit 12_5c. The fixing unit 12_5e is a member which is supported by the first guide unit 12_5a movably in the X direction, and on which the correction apparatus 13_5 holding the inkjet head 14_5 is fixed.

Further, the shape tracking apparatus 12_5 moves the fixing unit 12_5e in the X direction and the Y direction to change relative positions and relative inclination between the inkjet head 14_5 and the target object 40, causes the nozzle surface of the inkjet head 14_5 to face the target object 40, and causes the inkjet head 14_5 to perform scanning along the surface of the target object 40. Furthermore, as illustrated in FIG. 23, the correction apparatus 13_5 and the inkjet head 14_5 are mounted on the shape tracking apparatus 12_5 via the fixing unit 12_5e. Specifically, the shape tracking apparatus 12_5 maintains a predetermined distance and a predetermined angle of the inkjet head 14_5 relative to the surface of the target object 40 at the time of scanning of the inkjet head 14_5, that is, causes the inkjet head 14_5 to track the surface of the target object 40. Meanwhile, the shape tracking apparatus 12_5 may include a mechanism that moves the inkjet head 14_5 held by the correction apparatus 13_5 in the Z direction.

The correction apparatus 13_5 is, as illustrated in FIG. 23, an apparatus that is mounted on the fixing unit 12_5e of the shape tracking apparatus 12_5, holds the inkjet head 14_5, and controls (corrects) a position and a posture of the inkjet head 14_5 so as to cancel out oscillation of the inkjet head 14_5.

The inkjet head 14_5 is a liquid ejection head that includes a nozzle surface on which a plurality of nozzles for ejecting liquid, such as ink, are formed, and is held by the correction apparatus 13_5 in the fixing unit 12_5e of the shape tracking apparatus 12_5 as illustrated in FIG. 23.

Meanwhile, other configurations of the painting robot unit 10_5 are the same as those of the painting robot unit 10 according to the first embodiment as described above.

In the painting robot unit 10_5 as described above, with respect to the target object 40, the shape tracking apparatus 12_5 maintains the predetermined distance and the predetermined angle of the inkjet head 14_5 relative to the surface of the target object 40 to track the surface, causes the inkjet head 14_5 to perform scanning, and causes the inkjet head 14_5 to eject liquid to perform painting on the target object 40. Meanwhile, scanning of the inkjet head 14_5 by the shape tracking apparatus 12_5 is one example of operation of moving the inkjet head 14_5 relative to the target object 40.

In the painting robot unit 10_5 according to the third embodiment as described above, by preventing oscillation of the inkjet head 14_5 at the time of scanning of the inkjet head 14_5, it is possible to prevent oscillation of the inkjet head 14_5 that occurs when the inkjet head 14_5 moves, so that it is possible to improve painting accuracy.

Meanwhile, as a liquid ejection method according to the third embodiment, it is possible to adopt the same method as the first embodiment.

Meanwhile, in each of the embodiments as described above, when at least any of the functional units of the controller 21 of the control unit 20 is implemented by execution of a program, the program is provided by being incorporated in a ROM or the like in advance. Further, in each of the embodiments as described above, the program that is executed by the controller 21 of the control unit 20 may be provided by being recorded in a computer-readable recording medium, such as a Compact Disc Read Only Memory (CD-ROM), a flexible disk (FD), a Compact Disk-Recordable (CD-R), or a Digital Versatile Disc (DVD), in a computer-installable or a computer-executable file format. Furthermore, in each of the embodiments as described above, the program that is executed by the controller 21 of the control unit 20 may be stored in a computer connected to a network, such as the Internet, and may be provided by download via the network. Moreover, in each of the embodiments as described above, the program that is executed by the controller 21 of the control unit 20 may be provided or distributed via a network, such as the Internet. Furthermore, in each of the embodiments as described above, the program that is executed by the controller 21 of the control unit 20 has a module structure that includes at least any of the functional units as described above, and as actual hardware, the functional units as described above are loaded on a main storage device (the RAM 213) and generated by causing the CPU 211 to read the program from the ROM 212 as described above and execute the program.

Embodiments of the present invention are as follows.
<1> A liquid ejection apparatus including:
   a liquid ejection head configured to eject liquid to a target object;
   a shape tracking apparatus configured to control a position and an angle of the liquid ejection head relative to a surface of the target object, and move the liquid ejection head relative to the surface of the target object;
   a measurement apparatus configured to measure a movement state of the liquid ejection head by the shape tracking apparatus; and
   a correction apparatus holding the liquid ejection head, and configured to prevent oscillation of the liquid ejection head based on a measurement result by the measurement apparatus, the oscillation occurring when the shape tracking apparatus moves the liquid ejection head.
<2> The liquid ejection apparatus described in <1>, further includes:
   a control unit configured to cause the correction apparatus to prevent the oscillation of the liquid ejection head based on the measurement result obtained by the measurement apparatus.
<3> The liquid ejection apparatus described in <1> or <2>, in which the correction apparatus includes:
   a first member;
   a second member held movably in a first direction relative to the first member;
   a first guide member fixed to one of the first member and the second member, and configured to guide the second member movably in the first direction relative to the first member;
   a third member holding one of the liquid ejection head and the target object; and
   a second guide member fixed to one of the second member and the third member, and supporting the third member movably in a second direction different from the first direction relative to the second member.
<4> The liquid ejection apparatus described in <3>, in which the correction apparatus further includes:
   a first belt including one end connected to the third member in one orientation in the second direction, and the other end connected to the third member in the other orientation in the second direction;
   a second belt including one end connected to the third member in the other orientation in the second direction, and the other end connected to the third member in the one orientation in the second direction;
   a first motor including a rotary shaft around which the first belt runs, configured to drive the first belt by rotating the rotary shaft, and fixed to the first member; and
   a second motor including a rotary shaft around which the second belt runs, configured to drive the second belt by rotating the rotary shaft, and fixed to the first member.
<5> The liquid ejection apparatus described in <4>, in which
   the correction apparatus includes:
      a first driven pulley fixed to the second member;
      a second driven pulley fixed to the second member;
      a third driven pulley fixed to the second member; and
      a fourth driven pulley fixed to the second member,
   the first belt includes:
      a part extending from the one end extending in the second direction to reach the first driven pulley, and running around the first driven pulley to extend in one orientation in the first direction; and
      a part extending from the other end extending in the second direction to reach the fourth driven pulley, and running around the fourth driven pulley to extend in the other orientation in the first direction,
   the second belt includes:
      a part extending from the one end extending in the second direction to reach the third driven pulley, and running around the third driven pulley to extend in the one orientation in the first direction; and
      a part extending from the other end extending in the second direction to reach the second driven pulley, and running around the second driven pulley to extend in the one orientation in the first direction.
<6> The liquid ejection apparatus described in <4> or <5>, in which
   the first motor and the second motor are configured to:
   rotate in the same rotation direction to move the third member in the second direction; and
   rotate in different rotation directions to move the third member in the first direction.
<7> The liquid ejection apparatus described in <2>, in which the control unit includes:
   an acquisition unit configured to acquire measurement data indicating a measurement result obtained by the measurement apparatus;
   a calculation unit configured to calculate, based on the measurement data acquired by the acquisition unit, an amount of deviation that is an amount of a difference between a path of the liquid ejection head measured by the measurement apparatus and a path of one of the liquid ejection head and the target object determined in advance by the shape tracking apparatus; and
   a correction control unit configured to generate correction data for performing correction in response to the amount of deviation calculated by the calculation unit, and control the correction apparatus based on the correction data.
<8> The liquid ejection apparatus described in <7>, in which
   the measurement apparatus is connected to the control unit, and
   the acquisition unit is configured to directly acquire the measurement data from the measurement apparatus.
<9> The liquid ejection apparatus described in <7>, in which the acquisition unit is configured to acquire the measurement data measured by the measurement apparatus via a storage medium.
<10> The liquid ejection apparatus described in <7>, in which
   while the measurement apparatus is measuring movement of the liquid ejection head,
   the acquisition unit is configured to acquire the measurement data,
   the calculation unit is configured to calculate the amount of deviation based on the measurement data acquired by the acquisition unit, and
   the correction control unit is configured to generate the correction data for performing the correction in response to the amount of deviation.
<11> The liquid ejection apparatus described in <7>, in which the acquisition unit is configured to acquire the measurement data measured in advance by the measurement apparatus.
<12> The liquid ejection apparatus described in any one of <1> to <11>, in which
   the target object extends in a predetermined direction, and
   the shape tracking apparatus is configured to allow the liquid ejection head to move in an extending direction of the target object.
<13> The liquid ejection apparatus described in any one of <1> to <11>, in which
   the target object extends in a predetermined direction, and
   the liquid ejection apparatus further includes a conveying apparatus configured to allow the liquid ejection head to move in an extending direction of the target object.
<14> The liquid ejection apparatus described in <13>, in which
   the correction apparatus holds the liquid ejection head,
   the shape tracking apparatus holds the correction apparatus, and
   the conveying apparatus:
      supports the shape tracking apparatus movably in the extending direction; and
      is configured to move the liquid ejection head in the extending direction relative to the target object when the liquid ejection head ejects liquid.
<15> The liquid ejection apparatus described in <13>, in which
   the correction apparatus holds the liquid ejection head,
   the shape tracking apparatus holds the conveying apparatus, and
   the conveying apparatus:
      supports the correction apparatus holding the liquid ejection head movably in the extending direction; and
      is configured to move the liquid ejection head in the extending direction relative to the target object when the liquid ejection head ejects liquid.
<16> The liquid ejection apparatus described in any of <1> to <13>, in which
   the correction apparatus holds the target object, and
   the shape tracking apparatus is configured to move the target object relative to the liquid ejection head when the liquid ejection head ejects liquid.
<17> The liquid ejection apparatus described in <12> or <13>, in which the shape tracking apparatus is a Cartesian robot.
<18> A liquid ejection method implemented by a liquid ejection apparatus, the method including:
   ejecting, by a liquid ejection head, liquid to a target object;
   controlling, by a shape tracking apparatus, a position and an angle of the liquid ejection head relative to a surface of the target object, and moving the liquid ejection head relative to the surface of the target object;
   measuring, by a measurement apparatus, a movement state of the liquid ejection head by the shape tracking apparatus; and
   by a correction apparatus, holding the liquid ejection head, and preventing oscillation of the liquid ejection head based on a measurement result by the measurement apparatus, the oscillation occurring when the shape tracking apparatus moves the liquid ejection head.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. A liquid ejection apparatus comprising:
a liquid ejection head configured to eject liquid to a target object;
a shape tracking apparatus configured to control a position and an angle of the liquid ejection head relative to a surface of the target object, and move the liquid ejection head relative to the surface of the target object;
a measurement apparatus configured to measure a movement state of the liquid ejection head by the shape tracking apparatus; and
a correction apparatus holding the liquid ejection head, and configured to prevent oscillation of the liquid ejection head based on a measurement result by the measurement apparatus, the oscillation occurring when the shape tracking apparatus moves the liquid ejection head.

2. The liquid ejection apparatus according to claim 1, further comprising:
a control unit configured to cause the correction apparatus to prevent the oscillation of the liquid ejection head based on the measurement result obtained by the measurement apparatus.

3. The liquid ejection apparatus according to claim 1 or 2, wherein the correction apparatus includes:
a first member;
a second member held movably in a first direction relative to the first member;
a first guide member fixed to one of the first member and the second member, and configured to guide the second member movably in the first direction relative to the first member;
a third member holding one of the liquid ejection head and the target object; and
a second guide member fixed to one of the second member and the third member, and supporting the third member movably in a second direction different from the first direction relative to the second member.

4. The liquid ejection apparatus according to claim 3, wherein the correction apparatus further includes:
a first belt including one end connected to the third member in one orientation in the second direction, and the other end connected to the third member in the other orientation in the second direction;
a second belt including one end connected to the third member in the other orientation in the second direction, and the other end connected to the third member in the one orientation in the second direction;
a first motor including a rotary shaft around which the first belt runs, configured to drive the first belt by rotating the rotary shaft, and fixed to the first member; and
a second motor including a rotary shaft around which the second belt runs, configured to drive the second belt by rotating the rotary shaft, and fixed to the first member.

5. The liquid ejection apparatus according to claim 4, wherein
the correction apparatus includes:
a first driven pulley fixed to the second member;
a second driven pulley fixed to the second member;
a third driven pulley fixed to the second member; and
a fourth driven pulley fixed to the second member,
the first belt includes:
a part extending from the one end extending in the second direction to reach the first driven pulley, and running around the first driven pulley to extend in one orientation in the first direction; and
a part extending from the other end extending in the second direction to reach the fourth driven pulley, and running around the fourth driven pulley to extend in the other orientation in the first direction,
the second belt includes:
a part extending from the one end extending in the second direction to reach the third driven pulley, and running around the third driven pulley to extend in the one orientation in the first direction; and
a part extending from the other end extending in the second direction to reach the second driven pulley, and running around the second driven pulley to extend in the one orientation in the first direction.

6. The liquid ejection apparatus according to claim 4, wherein
the first motor and the second motor are configured to:
rotate in the same rotation direction to move the third member in the second direction; and
rotate in different rotation directions to move the third member in the first direction.

7. The liquid ejection apparatus according to claim 2, wherein the control unit includes:
an acquisition unit configured to acquire measurement data indicating a measurement result obtained by the measurement apparatus;
a calculation unit configured to calculate, based on the measurement data acquired by the acquisition unit, an amount of deviation that is an amount of a difference between a path of the liquid ejection head measured by the measurement apparatus and a path of one of the liquid ejection head and the target object determined in advance by the shape tracking apparatus; and
a correction control unit configured to generate correction data for performing correction in response to the amount of deviation calculated by the calculation unit, and control the correction apparatus based on the correction data.

8. The liquid ejection apparatus according to claim 7, wherein
the measurement apparatus is connected to the control unit, and
the acquisition unit is configured to directly acquire the measurement data from the measurement apparatus.

9. The liquid ejection apparatus according to claim 7, wherein
while the measurement apparatus is measuring movement of the liquid ejection head,
the acquisition unit is configured to acquire the measurement data,
the calculation unit is configured to calculate the amount of deviation based on the measurement data acquired by the acquisition unit, and
the correction control unit is configured to generate the correction data for performing the correction in response to the amount of deviation.

10. The liquid ejection apparatus according to claim 1 or 2, wherein
the target object extends in a predetermined direction, and
the shape tracking apparatus is configured to allow the liquid ejection head to move in an extending direction of the target object.

11. The liquid ejection apparatus according to claim 1 or 2, wherein
the target object extends in a predetermined direction, and
the liquid ejection apparatus further comprises a conveying apparatus configured to allow the liquid ejection head to move in an extending direction of the target object.

12. The liquid ejection apparatus according to claim 11, wherein
the correction apparatus holds the liquid ejection head,
the shape tracking apparatus holds the correction apparatus, and
the conveying apparatus:
supports the shape tracking apparatus movably in the extending direction; and
is configured to move the liquid ejection head in the extending direction relative to the target object when the liquid ejection head ejects liquid.

13. The liquid ejection apparatus according to claim 11, wherein
the correction apparatus holds the liquid ejection head,
the shape tracking apparatus holds the conveying apparatus, and
the conveying apparatus:
supports the correction apparatus holding the liquid ejection head movably in the extending direction; and
is configured to move the liquid ejection head in the extending direction relative to the target object when the liquid ejection head ejects liquid.

14. The liquid ejection apparatus according to claim 1 or 2, wherein
the correction apparatus holds the target object, and
the shape tracking apparatus is configured to move the target object relative to the liquid ejection head when the liquid ejection head ejects liquid.

15. A liquid ejection method implemented by a liquid ejection apparatus, the method comprising:
ejecting, by a liquid ejection head, liquid to a target object;
controlling, by a shape tracking apparatus, a position and an angle of the liquid ejection head relative to a surface of the target object, and moving the liquid ejection head relative to the surface of the target object;
measuring, by a measurement apparatus, a movement state of the liquid ejection head by the shape tracking apparatus; and
by a correction apparatus, holding the liquid ejection head, and preventing oscillation of the liquid ejection head based on a measurement result by the measurement apparatus, the oscillation occurring when the shape tracking apparatus moves the liquid ejection head.
